(19) Europäisches Patentamt
European Patent Office
Office européen des brevets

(11) EP 4 542 187 A1

(12) EUROPEAN PATENT APPLICATION
published in accordance with Art. 153(4) EPC

(43) Date of publication:
23.04.2025 Bulletin 2025/17

(51) International Patent Classification (IPC):
$G01J\ 5/00^{(2022.01)}$ $C23C\ 2/06^{(2006.01)}$
$G01J\ 5/60^{(2006.01)}$

(21) Application number: 23849790.3

(22) Date of filing: 26.06.2023

(52) Cooperative Patent Classification (CPC):
C23C 2/06; G01J 5/00; G01J 5/60

(86) International application number:
PCT/JP2023/023673

(87) International publication number:
WO 2024/029231 (08.02.2024 Gazette 2024/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.08.2022 JP 2022125745

(71) Applicant: NIPPON STEEL CORPORATION
Chiyoda-ku
Tokyo 100-8071 (JP)

(72) Inventors:
• ISEI, Yoshito
Tokyo 100-8071 (JP)
• MURAMATSU, Masaomi
Tokyo 100-8071 (JP)
• SUEMATSU, Yoshiaki
Tokyo 100-8071 (JP)
• YOSHIDA, Keisuke
Tokyo 100-8071 (JP)
• MORI, Yoshinori
Tokyo 100-8071 (JP)

(74) Representative: Vossius & Partner
Patentanwälte Rechtsanwälte mbB
Siebertstrasse 3
81675 München (DE)

(54) TEMPERATURE MEASUREMENT DEVICE AND TEMPERATURE MEASUREMENT METHOD

(57) In a temperature measurement apparatus that measures a temperature of a steel sheet, an imaging unit that is a spectral camera takes a range including at least a part in a sheet width direction of the steel sheet as a field of view and acquires radiation luminance of the steel sheet at plural wavelengths at each position on a surface of the steel sheet in the field of view, and an arithmetic processing unit 14 selects two wavelengths from wavelength range at which the radiation luminance of the steel sheet is acquired by the imaging unit, and calculates a temperature at each position on the surface of the steel sheet by two-color radiation temperature measurement, by using the radiation luminance of the steel sheet acquired by the imaging unit at the two selected wavelengths.

FIG. 2

**Description**

Technical Field

The technique of the present disclosure relates to a temperature measurement apparatus and a temperature measurement method, and more particularly, to a temperature measurement apparatus and a temperature measurement method using radiation luminance detected from an object.

Background Art

A so-called hot dip galvannealed steel sheet (referred to as a "GA steel sheet" below) obtained by subjecting a hot-dip galvanized steel sheet to heat treatment and generating an iron-zinc alloy on a surface thereof is excellent in corrosion resistance, coatability, and press workability, and is used for, for example, an outer sheet of an automobile.

A manufacturing process for manufacturing a GA steel sheet includes an alloying process in which a steel sheet is immersed in molten zinc and then heated in an alloying furnace, thereby forming a plated alloy layer of zinc and iron on a surface of the steel sheet. The iron content in the plated alloy layer in the alloying process is generally called an alloying degree. Since the alloying degree has a large influence on the characteristics of the GA steel sheet, such as press formability and durability, it is important to control the alloying degree to be within an appropriate range.

Since the alloying degree is correlated with the heating temperature and the heating time during an alloying treatment, it is important to control the temperature distribution in a width direction to be uniform or to control the temperature to be in an appropriate temperature range in the alloying process in order to manufacture a GA steel sheet including a plated alloy layer with uniformly high quality. Therefore, a technique of measuring the temperature distribution in the width direction in the alloying process is required.

As a remote temperature measurement method capable of measuring a temperature of a target object in a non-contact manner at a high speed, there is a radiation temperature measurement method. The radiation temperature measurement method is a method in which heat radiation light emitted from an object according to the temperature of the object is detected by a photodetector, and the temperature is measured by the intensity (radiation luminance). In the radiation temperature measurement method, it is necessary to ascertain an emissivity different for each target object and each surface state thereof in order to accurately measure the temperature. However, in the manufacturing process of the GA steel sheet, in the process of alloying by reaction of molten zinc with iron, the roughness of the surface of the steel sheet changes, and the emissivity of the steel sheet changes greatly from about 0.2 before alloying to about 0.8 after alloying. For this reason, it is difficult to measure the surface temperature of the GA steel sheet in the alloying process by using a general radiation thermometer.

As a temperature measurement method using the radiation temperature measurement method, there is a two-color radiation temperature measurement method. Among radiation luminance of radiation light emitted from a measurement target object at a temperature T [K], the radiation luminance $E_A$ and $E_B$ at two wavelengths $\lambda_A$ and $\lambda_B$ can be represented by Formulas (1) and (2) when the emissivities at the two wavelengths $\lambda_A$ and $\lambda_B$ are set as $\varepsilon_A$ and $\varepsilon_B$. Here, $L_d$ ($\lambda$, T) is radiation luminance at the temperature T and the wavelength $\lambda$ in black-body radiation according to Planck's law, and can be represented as Formula (3). Note that $c_1$ and $c_2$ are Planck's radiation constants.

[Math. 1]

$$E_A = \varepsilon_A L_b(\lambda_A, T) \tag{1}$$

$$E_B = \varepsilon_B L_b(\lambda_B, T) \tag{2}$$

$$L_b(\lambda, T) = \frac{2c_1}{\lambda^5} \frac{1}{\exp(c_2/\lambda T) - 1} \cong \frac{2c_1}{\lambda^5} \exp\left(-\frac{c_2}{\lambda T}\right) \tag{3}$$

In the two-color radiation temperature measurement method, the temperature T is calculated by taking the ratio (two-color ratio R) of the radiation luminance at two wavelengths as in Formula (4). In particular, the case of $\varepsilon_A = \varepsilon_B$ is called a gray body, and the influence of the emissivity can be eliminated by offsetting $\varepsilon_A$ and $\varepsilon_B$, and thus the temperature T can be easily measured.

[Math. 2]

$$R = \frac{E_A}{E_B} = \frac{\varepsilon_A}{\varepsilon_B}\left(\frac{\lambda_B}{\lambda_A}\right)^5 \exp\left\{-\frac{c_2}{T}\left(\frac{1}{\lambda_A} - \frac{1}{\lambda_B}\right)\right\} \qquad (4)$$

Furthermore, the emissivity can also be calculated from the calculated temperature T and the radiation luminance by Formula (1). There is an advantage that the sensitivity is improved as the difference between the two wavelengths increases (as the wavelengths become more separated from each other), but in this case, it is difficult to generally satisfy the condition of a gray body. In such a case, the temperature can be calculated by separately obtaining the emissivity with some method and using the correct ratio of the emissivities.

As described above, in the GA steel sheet, when the alloy layer is caused to grow by heating the steel sheet coated with molten zinc, the surface roughness of the steel sheet changes from a mirror surface state to a rough surface state with the progress of alloying. In this case, the emissivity changes from about 0.2 (before alloying) to about 0.8 (after alloying). This corresponds to the fact that molten zinc has metallic luster, but after alloying, becomes solid and a rough surface is obtained simultaneously with the generation of a FeZn compound.

The emissivity $\varepsilon_i$ at the wavelength $\lambda_i$ [$\mu$m] of molten zinc and the zinc after alloying is represented by a wavelength dependence formula as in Formula (5), and empirically, it is known that the wavelength dependence coefficient $A_1 = 0.1$. For this reason, in the steel sheet in the alloying process, in general, the emissivities at the two wavelengths $\lambda_A$ and $\lambda_B$ are not equal to each other, and the relationship as in Formula (6) is obtained, and thus the temperature cannot be calculated by the two-color radiation temperature measurement method with the gray body in mind. For this reason, as disclosed in, for example, Japanese Patent Application Laid-Open (JP-A) Nos. H2-85730 and H5-231944, in a conventional radiation thermometer for a GA steel sheet in the alloying process, radiation luminance is measured at two or more wavelengths, and Formulas (1) and (2), and Formula (6) that is a relational formula between emissivities at two wavelengths are simultaneously solved and numerically solved, thereby calculating the temperature and emissivity.

[Math. 3]

$$\varepsilon_i = A_0 + \frac{A_1}{\lambda_i} \qquad (5)$$

$$\varepsilon_B = \varepsilon_A - a \qquad \left(a = \frac{A_1}{\lambda_A} - \frac{A_1}{\lambda_B}\right) \qquad (6)$$

A method of measuring a temperature distribution of a target having an emissivity that fluctuates, by using the temperature measurement method as described above has been proposed. For example, JP-A No. H9-53992 discloses a method in which radiation luminance of multiple wavelengths in a scanning direction is detected by scanning radiation light by a rotating mirror and dispersing the light, and a temperature distribution is measured by performing calculation based on the radiation luminance at multiple wavelengths.

Furthermore, as a method of measuring a temperature distribution at a high speed, a method of measuring a spatial distribution of heat radiation light emitted from an object with a one-dimensional imaging element or a two-dimensional imaging element is known. In such a method, it is assumed that the emissivity is constant in the field of view, and temperature measurement having no practical problem can be performed as long as such a premise is satisfied. For example, JP-A No. 2012-132442 discloses a method in which heat radiation light emitted from a measurement target is divided into three wavelengths and imaged as a two-dimensional image of three wavelengths, thereby measuring the distribution of the emissivity and temperature.

SUMMARY OF INVENTION

Technical Problem

However, the technique disclosed JP-A No. H9-53992 has a problem that, since the radiation luminance is detected while scanning is performed by the rotating mirror, a response speed corresponding to the rotation speed of the mirror is obtained, and it takes time to perform measurement in the width direction.

In addition, the technique disclosed in JP-A No. 2012-132442 has a disadvantage that a two-dimensional imaging element used for forming a distribution image has a lower dynamic range than a photodetector used for temperature measurement, although it is possible to perform highly responsive temperature distribution measurement since a spatial distribution of radiation luminance can be obtained by imaging at one time. For example, the radiation luminance is taken as digital data of 1024 shades of gray or 4096 shades of gray. For this reason, when the detected radiation luminance is too high, the detected radiation luminance is saturated, and when the detected radiation luminance is too low, the detected radiation luminance is insufficient, and it is not possible to correctly measure the temperature. Therefore, it is necessary to adjust the sensitivity such that the detected luminance level falls within a measurable temperature range, by adjusting the gain and the exposure time of the imaging device according to the temperature of the measurement target. However, in a case in which the difference in emissivity is four times as large as that of the GA steel sheet in the alloying process, a part having a large emissivity and a part having a small emissivity are mixed in the same field of view range (image). In such a case, even if the sensitivity adjustment is performed, it is difficult to stably acquire the radiation luminance at both parts simultaneously without excess or deficiency and to accurately measure the temperature.

Therefore, an object of the technique of the disclosure is to provide a temperature measurement apparatus and a temperature measurement method capable of measuring a temperature distribution of a target having emissivity that changes in a wide range with high response and high accuracy.


Solution to Problem

A first aspect of the technique of the disclosure is a temperature measurement apparatus that measures a temperature of a steel sheet, the temperature measurement apparatus including: an imaging unit that is a spectral camera that takes a range including at least a part in a sheet width direction of the steel sheet as a field of view and acquires radiation luminance of the steel sheet at a plurality of wavelengths at each position on a surface of the steel sheet in the field of view; and an arithmetic processing unit that selects two wavelengths from wavelength range at which the radiation luminance of the steel sheet is acquired by the imaging unit, and calculates a temperature at each position on the surface of the steel sheet by two-color radiation temperature measurement, by using the radiation luminance of the steel sheet acquired by the imaging unit at the two selected wavelengths.

According to a second aspect of the technique of the disclosure, in the temperature measurement apparatus according to the first aspect, the arithmetic processing unit holds at least two or more sets of wavelengths, consisting of two wavelengths, within wavelength range at which the radiation luminance of the steel sheet is acquired by the imaging unit, in a case in which a position on the surface of the steel sheet at which the temperature is intended to be measured is in a region in which the radiation luminance of the steel sheet is large, selects two wavelengths included in a set in which two wavelengths on a short wavelength side are combined, from among the plurality of sets of wavelengths that are held, and, in a case in which the position on the surface of the steel sheet at which the temperature is intended to be measured is in a region in which the radiation luminance of the steel sheet is small, selects two wavelengths consisted in a set on a long wavelength side, from among the plurality of sets of wavelengths that are held, and calculates the temperature at each position on the surface of the steel sheet by two-color radiation temperature measurement, by using the radiation luminance of the steel sheet acquired by the imaging unit at the selected two wavelengths.

According to a third aspect of the technique of the disclosure, in the temperature measurement apparatus according to the second aspect, the steel sheet is a hot dip galvannealed steel sheet, a region in which the radiation luminance of the steel sheet is large corresponds to a region in which alloying of the surface of the steel sheet has progressed, and a region in which the radiation luminance of the steel sheet is small corresponds to a region in which alloying of the surface of the steel sheet has not progressed.

According to a fourth aspect of the technique of the disclosure, in the temperature measurement apparatus according to the second or third aspect, the arithmetic processing unit increases an exposure amount of the imaging unit in a case in which the radiation luminance of the steel sheet acquired in a set of wavelengths including the longest wavelength among the plurality of sets of wavelengths held by the arithmetic processing unit falls below a lower limit threshold value set in advance, and reduces the exposure amount of the imaging unit in a case in which the radiation luminance of the steel sheet acquired in a set of wavelengths including the shortest wavelength among the plurality of sets of wavelengths held by the arithmetic processing unit exceeds an upper limit threshold value set in advance.

According to a fifth aspect of the technique of the disclosure, in the temperature measurement apparatus according to any one of the first to fourth aspects, the arithmetic processing unit divides the field of view of the imaging unit into a plurality of sections along a width direction of the steel sheet, and obtains a wavelength range in which the imaging unit is able to acquire the radiation luminance of the steel sheet, for each of the sections, selects two wavelengths from the wavelength range in which the radiation luminance of the steel sheet is able to be acquired for each section, and calculates the temperature at each position on the surface of the steel sheet by two-color radiation temperature measurement, by using the radiation luminance of the steel sheet acquired by the imaging unit at the selected two wavelengths.

According to a sixth aspect of the technique of the disclosure, in the temperature measurement apparatus according to any one of the first to fourth aspects, the arithmetic processing unit selects, as two wavelengths, wavelengths shorter than a wavelength at which the radiation luminance of the steel sheet becomes maximum.

According to a seventh aspect of the technique of the disclosure, in the temperature measurement apparatus according to any one of the first to sixth aspects, the arithmetic processing unit detects edge positions on both sides in the sheet width direction of the steel sheet from an image acquired by the imaging unit, and determines a range in which temperature is measured based on the detected edge positions.

An eighth aspect of the technique of the disclosure is a temperature measurement method of measuring a temperature of a steel sheet, the temperature measurement method including: a luminance acquisition step of acquiring radiation luminance of the steel sheet at a plurality of wavelengths at each position on a surface of the steel sheet in a field of view, by using an imaging unit that is a spectral camera taking, as the field of view, a range including at least a part of the steel sheet in a sheet width direction; and a temperature calculation step of, by using an arithmetic processing unit, selecting two wavelengths from wavelength range at which the radiation luminance of the steel sheet is acquired by the imaging unit and calculating a temperature at each position on the surface of the steel sheet by two-color radiation temperature measurement, by using the radiation luminance of the steel sheet acquired by the imaging unit at the two selected wavelengths.

According to a ninth aspect of the technique of the disclosure, in the temperature measurement method according to the eighth aspect, the arithmetic processing unit holds at least two or more sets of wavelengths, consisting of two wavelengths, within wavelength range at which the radiation luminance of the steel sheet is acquired by the imaging unit, and, in the temperature calculation step, in a case in which a position on the surface of the steel sheet at which the temperature is intended to be measured is in a region in which the radiation luminance of the steel sheet is large, two wavelengths included in a set in which two wavelengths on a short wavelength side are combined are selected from among the plurality of sets of wavelengths that are held, and, in a case in which the position on the surface of the steel sheet at which the temperature is intended to be measured is in a region in which the radiation luminance of the steel sheet is small, two wavelengths consisted in a set on a long wavelength side are selected from among the plurality of sets of wavelengths that are held, and the temperature at each position on the surface of the steel sheet is calculated by two-color radiation temperature measurement, by using the radiation luminance of the steel sheet acquired by the imaging unit at the selected two wavelengths.

A tenth aspect of the technique of the disclosure is a method of measuring a temperature of a hot dip galvannealed steel sheet as the steel sheet, in the temperature measurement method according to the ninth aspect, in which, in the temperature calculation step, in a case in which the position on the surface of the steel sheet at which the temperature is intended to be measured is in a region in which alloying of the surface of the steel sheet has progressed and the radiation luminance of the steel sheet is large, two wavelengths included in a set in which two wavelengths on the short wavelength side are combined are selected from among the plurality of sets of wavelengths that are held, and in a case in which the position on the surface of the steel sheet at which the temperature is intended to be measured is in a region in which alloying of the surface of the steel sheet has not progressed and the radiation luminance of the steel sheet is small, two wavelengths included in a set in which two wavelengths on the long wavelength side are combined are selected from among the plurality of sets of wavelengths that are held.

According to an eleventh aspect of the technique of the disclosure, in the temperature measurement method according to the ninth or tenth aspect, an exposure amount of the imaging unit is increased in a case in which the radiation luminance of the steel sheet acquired in a set of wavelengths including the longest wavelength among the plurality of sets of wavelengths held by the arithmetic processing unit falls below a lower limit threshold value set in advance, and the exposure amount of the imaging unit is reduced in a case in which the radiation luminance of the steel sheet acquired in a set of wavelengths including the shortest wavelength among the plurality of sets of wavelengths held by the arithmetic processing unit exceeds an upper limit threshold value set in advance.

According to a twelfth aspect of the technique of the disclosure, in the temperature measurement method according to any one of the eighth to eleventh aspects, in the temperature calculation step, the field of view of the imaging unit is divided into a plurality of sections along a width direction of the steel sheet, and a wavelength range in which the imaging unit is able to acquire the radiation luminance of the steel sheet is obtained for each of the sections, two wavelengths from the wavelength range in which the radiation luminance of the steel sheet is able to be acquired are selected for each section, and the temperature at each position on the surface of the steel sheet is calculated by two-color radiation temperature measurement, by using the radiation luminance of the steel sheet acquired by the imaging unit at the selected two wavelengths.

According to a thirteenth aspect of the technique of the disclosure, in the temperature measurement method according to any one of the eighth to twelfth aspects, in the temperature calculation step, wavelengths shorter than a wavelength at which the radiation luminance of the steel sheet becomes maximum are selected as two wavelengths.

According to a fourteenth aspect of the technique of the disclosure, in the temperature measurement method according to any one of the eighth to thirteenth aspects, in the temperature calculation step, edge positions on both sides in the sheet width direction of the steel sheet are detected from an image acquired by the imaging unit, and a range in which temperature is measured is determined based on the detected edge positions.

Advantageous Effects of Invention

According to the technique of the disclosure, there are provided a temperature measurement apparatus and a temperature measurement method capable of measuring a temperature distribution of a target having an emissivity that changes in a wide range with high response and high accuracy.

BRIEF DESCRIPTION OF DRAWINGS

Fig. 1 is a diagram showing a configuration of continuous hot-dip galvanizing equipment in which a temperature measurement apparatus according to first and second embodiments is installed.

Fig. 2 is a functional block diagram of an arithmetic processing unit of the temperature measurement apparatus according to the first embodiment.

Fig. 3 is a block diagram showing a hardware configuration of the arithmetic processing unit.

Fig. 4 is a flowchart showing a flow of temperature measurement processing in the first embodiment.

Fig. 5 is a functional block diagram of an arithmetic processing unit of the temperature measurement apparatus according to the second embodiment.

Fig. 6 is a flowchart showing a flow of temperature measurement processing in the second embodiment.

Fig. 7 is a graph showing a relationship between a wavelength and black-body furnace measurement luminance.

Fig. 8 is a graph showing a relationship between a black-body furnace temperature and radiation luminance.

Fig. 9 is a graph showing a relationship between a reciprocal of a temperature and the radiation luminance.

Fig. 10 is a diagram showing a configuration of a test apparatus in an example.

Fig. 11 is a graph showing temporal changes of a luminance value and the radiation luminance.

Fig. 12 is a graph showing an example of a calculation result of the temperature.

Fig. 13 is a graph showing temporal changes of the luminance value and the radiation luminance.

Fig. 14 is a graph showing an example of the calculation result of the temperature.

Fig. 15 is a diagram showing a measurement example of a temperature and an emissivity at each position in a width direction.

Fig. 16 is a schematic diagram showing characteristics of a detector provided in a spectral camera.

DESCRIPTION OF EMBODIMENTS

Hereinafter, examples of embodiments of the technique of the disclosure will be described with reference to the drawings.

<First Embodiment>

(Description of Configuration of Temperature Measurement Apparatus)

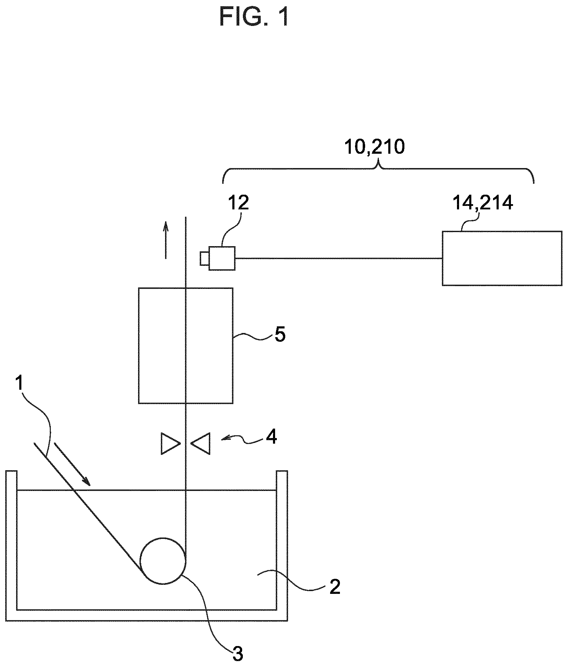

Fig. 1 shows a configuration of continuous hot-dip galvanizing equipment in which a temperature measurement apparatus 10 according to a first embodiment is installed. A steel sheet 1 to be plated is subjected to continuous annealing (not shown), and then introduced into a hot-dip galvanizing bath 2 containing molten zinc. The steel sheet 1 introduced into the hot-dip galvanizing bath 2 is changed in an upward direction by an in-bath roll 3 and drawn out from the hot-dip galvanizing bath 2. A wiping gas is blown from a wiping nozzle 4 toward both surfaces of the steel sheet 1 to which molten zinc adheres, and the coating thickness of molten zinc is adjusted. Thereafter, the steel sheet 1 having the coating thickness of molten zinc that has been adjusted passes through the inside of an alloying furnace 5. The alloying furnace 5 heats the steel sheet 1 to around from 500°C to 550°C, which is an alloying temperature, by induction heating. Alloying of the heated steel sheet 1 is completed until the steel sheet reaches an upper roll (not shown).

The temperature measurement apparatus 10 according to the first embodiment is a device that measures the temperature of a GA steel sheet. Specifically, the apparatus is capable of measuring a temperature (temperature distribution) in a direction perpendicular to a conveyance direction of the GA steel sheet. The temperature measurement apparatus 10 includes an imaging unit 12 and an arithmetic processing unit 14.

The imaging unit 12 is configured by a hyperspectral camera that sets a linear range including at least a part of a direction (also referred to as a "sheet width direction" below) perpendicular to the conveyance direction of the GA steel sheet shown in Fig. 1 as a field of view and acquires the radiation luminance of the GA steel sheet for each of a plurality of wavelengths at each position on the surface of the GA steel sheet in the field of view. Note that the "spectral camera" in the technique of the disclosure is a camera capable of acquiring information for each wavelength by dispersing light. With an RBG camera that is a conventional camera, information regarding light of three wavelengths of red, blue, and green can be instantaneously acquired for each imaged position. However, when the spectral camera is used, for example, information regarding light having a wavelength of 100 or more can be instantaneously acquired for each imaged position. The spectral camera may also be referred to as a band hyperspectral camera, a multispectral camera, or the like, and the spectral camera is referred to as a hyperspectral camera below.

A hyperspectral camera that can be used as the imaging unit 12 is a camera that can image spectral information obtained by dispersing light for each wavelength together with spatial information. As a result, since more information than that obtained by visual observation or an RGB camera is obtained, research has been advanced in fields such as engineering, biological, and medical fields. Furthermore, in recent years, devices have become inexpensive and have been increasingly installed to production lines, and are also used in the fields of foreign material detection, quality control, component inspection, and the like.

A general hyperspectral camera is a line-scan type. This has a line-shaped field of view and images a target, thereby acquiring detailed spectrum information for each pixel constituting a line. In order to realize this function, the hyperspectral camera is configured to include a lens, a slit part, a spectrometer, and a two-dimensional imaging element. First, an image of a target is formed in the slit part by the lens, light formed in the slit part is delivered to the spectrometer as one-dimensional information (line), the light is dispersed into a plurality of wavelengths by a diffraction grating or a prism in the spectrometer, and the light dispersed by the two-dimensional imaging element is captured.

As a result, the two-dimensional imaging element of the hyperspectral camera acquires the detection intensity of light for each wavelength at each position in the linear field of view as a two-dimensional hyperspectral image of space CH (channel) × wavelength CH. The number of spaces CH is generally 320, 640, or the like, and the number of wavelengths CH is 100, 200, or the like. The wavelength band of the spectral spectrum is determined by the specification of the spectrometer, the size of the two-dimensional imaging element, the detection wavelength band, and the number of CHs. The detection intensity of the light at each position is acquired as a luminance value of, for example, 4096 shades of gray (12 bits) in a hyperspectral image. It can also be said that the hyperspectral camera in the present embodiment having such a configuration is configured to include a one-dimensional diffraction grating.

By using the hyperspectral camera having such characteristics, the spectral radiation spectrum over a wide range in the sheet width direction of the GA steel sheet can be acquired at a high speed by one imaging. Thus, it is possible to realize the temperature measurement apparatus 10 capable of high-speed temperature measurement.

In addition, by using one or a plurality of hyperspectral cameras if appropriate, it is also possible to measure the temperature over the entire width of the GA steel sheet in the sheet width direction. In addition, by sequentially measuring the GA steel sheets passed in a rolling (longitudinal) direction, it is possible to measure the temperature over the entire length of the GA steel sheet. Therefore, it is also possible to measure the temperature over the entire length and the entire width of the GA steel sheet.

Furthermore, by using a two-color radiation temperature measurement method for temperature measurement, the two wavelengths (that is, a wavelength set including two wavelengths) used in the two-color radiation temperature measurement can be freely selected from among the wavelengths of the spectral spectrum obtained by the hyperspectral camera, and the change in the emissivity of a temperature measurement target object can also be followed.

The imaging unit 12 images one hyperspectral image for each field of view of one line in the sheet width direction of the GA steel sheet. More specifically, the imaging unit 12 captures a hyperspectral image as an image including radiation luminance of a plurality of wavelengths for each measurement point in the field of view of one line in the sheet width direction of the GA steel sheet.

Note that the temperature of the GA steel sheet in the alloying process is a temperature that can be generally considered to follow the Wien radiation law, and a wavelength shorter than a wavelength at which the radiation luminance indicated by the Wien displacement law at the temperature of the GA steel sheet becomes maximum is inevitably selected as a wavelength at which the radiation luminance is acquired by the imaging unit 12.

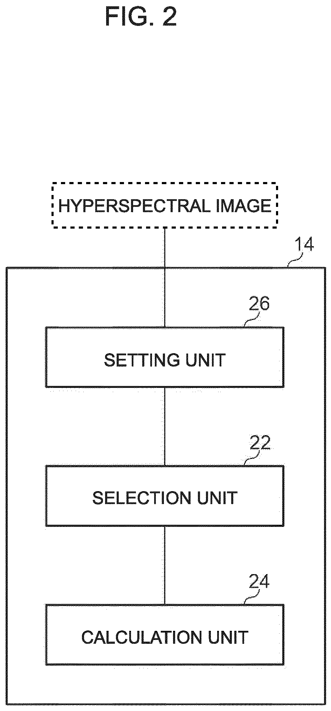

The arithmetic processing unit 14 is a functional unit that calculates the temperature of the GA steel sheet based on the hyperspectral image imaged by the imaging unit 12, and is realized by a hardware configuration which will be described later. As shown in Fig. 2, the arithmetic processing unit 14 functionally includes a setting unit 26, a selection unit 22, and a calculation unit 24.

The setting unit 26 sets an exposure time of the imaging unit 12. Specifically, the setting unit 26 first takes trial shooting of the surface of the GA steel sheet under a provisional condition by a hyperspectral camera provided in the imaging unit 12. The setting unit 26 sets the exposure time of the imaging unit 12 to be longer than the exposure time that is currently set, in a case in which the radiation luminance of the GA steel sheet acquired in the set of wavelengths including the longest wavelength among the wavelengths included in the plurality of sets of wavelengths held by the selection unit 22 which will be described later falls below a lower limit threshold value set in advance, for the hyperspectral image obtained by the trial shooting. As a result, the exposure amount of the imaging unit 12 increases. In addition, in a case in which the radiation luminance of the GA steel sheet acquired in the set of wavelengths including the shortest wavelength among the wavelengths included in the plurality of sets of wavelengths held by the arithmetic processing unit 14 exceeds an upper limit threshold value set in advance, the setting unit 26 sets the exposure time of the imaging unit 12 to a time shorter than the exposure time that is currently set. As a result, the exposure amount of the imaging unit 12 is reduced.

Then, an operation of performing imaging again under the newly set provisional condition and confirming the relationship between the radiation luminance and the threshold value again is repeated until the imaging condition of the imaging unit 12 becomes a condition suitable for temperature measurement.

In this manner, an appropriate condition can be determined as the imaging condition of the imaging unit 12. As the hyperspectral image used in the following description, an image imaged under such determined imaging conditions can be used.

Note that the setting unit 26 may increase the exposure amount of the imaging unit 12 by setting an aperture value of the imaging unit 12 to a value larger than an aperture value that is currently set, in addition to or instead of setting the exposure time of the imaging unit 12 to a time longer than the exposure time that is currently set. Furthermore, the setting unit 26 may reduce the exposure amount of the imaging unit 12 by setting the aperture value of the imaging unit 12 to a value smaller than the aperture value that is currently set, in addition to or instead of setting the exposure time of the imaging unit 12 to a time shorter than the exposure time that is currently set.

Furthermore, in a case in which there is a margin in the imaging conditions of the imaging unit 12 or in a case in which the temperature can be accurately calculated by the calculation unit 24 which will be described later, the setting unit 26 does not need to be provided or the processing in the setting unit 26 does not need to be performed.

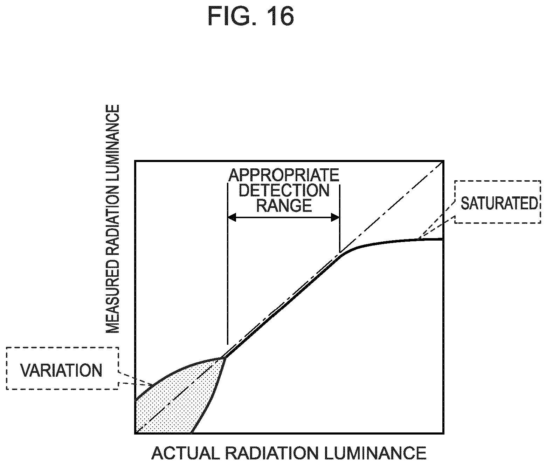

Here, the detector that is a two-dimensional imaging element provided in the hyperspectral camera can instantaneously acquire two-dimensional luminance information (luminance value) incident from the GA steel sheet. As shown in Fig. 16, when the luminance value exceeds an appropriate detection range of the detector, the measured value falls within a saturated range. Therefore, the upper limit of the detectable luminance value is determined. Therefore, it is necessary to perform adjustment such that a luminance value that does not exceed the upper limit is detected. In addition, when the luminance value falls below the appropriate detection range of the detector, the measured value varies. Therefore, in order to accurately calculate the temperature, it is necessary to detect a luminance value of a certain degree or more, and the lower limit of the luminance value to be detected is also determined. Therefore, it is necessary to perform adjustment such that a luminance value exceeding the lower limit is detected.

As shown in Fig. 16, there is an appropriate range in which the actual radiation luminance and the measured radiation luminance substantially coincide with each other, but the range is relatively narrow in the hyperspectral camera. Therefore, it is necessary to determine an appropriate range of the hyperspectral camera to be used in advance. Since the appropriate range (specifically, the luminance lower limit value $I'_{min}$ and the luminance upper limit value $I'_{max}$) largely depends on the model of the hyperspectral camera or the like, one fixed appropriate range cannot be determined in the temperature measurement apparatus of the present embodiment. The appropriate range is determined according to the model of the hyperspectral camera to be used. In addition, the appropriate range is determined every time the model or the like of the hyperspectral camera is changed. In addition, as the radiation luminance (as will be described later, radiation luminance at two different wavelengths) used for calculating the temperature of the GA steel sheet, a set of radiation luminance within this appropriate range is selected from radiation luminances of a large number of wavelengths obtained by the hyperspectral camera for each imaged position (that is, the temperature measurement point in the sheet width direction).

However, in a case in which there is a large difference in emissivity depending on the position in the same hyperspectral image, the upper limit and the lower limit of the detected luminance value cannot be satisfied at the same time, and the accurate temperature is not be calculated over a wide range in the sheet width direction of the GA steel sheet. For example, there are a problem that the luminance value of the low emissivity part can be appropriately detected, but the luminance value of the high emissivity part is saturated and cannot be detected, and a problem that the luminance value of the high emissivity part can be appropriately detected, but the detection intensity of the low emissivity part is insufficient and the luminance value cannot be accurately detected.

The radiation luminance (luminance value) is represented by a function of the temperature and the wavelength. The wavelength at which the radiation luminance is maximized depends on the Wien displacement law, and the wavelength [m] at the temperature T [K] can be calculated at 0.0028978/T. That is, at a wavelength shorter than this, the radiation luminance monotonously increases as the wavelength increases. Therefore, in the present embodiment, a hyperspectral image in a wavelength range in which the radiation luminance monotonously increases with respect to the wavelength is acquired by a hyperspectral camera, and when extracting the radiation luminance from the hyperspectral image, two wavelengths (that is, a wavelength set including two wavelengths) used for acquiring the radiation luminance are switched according to the GA steel sheet surface position as follows.

First, in a case in which a measurement point at which the temperature on the GA steel sheet is to be measured is included in a region in which the radiation luminance is large, the radiation luminance at a short wavelength is used, whereby the radiation luminance can be made lower than that on a long wavelength side. Thus, the influence of detector saturation can be prevented. In addition, in a case in which the measurement point is included in a region in which the radiation luminance is small, the radiation light intensity can be made larger than that on the short wavelength side by using the radiation luminance at the long wavelength, and thus, it is possible to prevent the influence of insufficient intensity of the radiation light.

Therefore, the selection unit 22 holds at least two or more sets of wavelengths including two wavelengths as a plurality of wavelengths at which the radiation luminance of the GA steel sheet is acquired by the imaging unit 12. Then, in a case in which the position on the surface of the GA steel sheet for which the temperature is intended to be measured is in a region in which the radiation luminance of the GA steel sheet is large, the selection unit 22 selects two wavelengths included in a set of a combination of two wavelengths on the short wavelength side among the plurality of sets of wavelengths that are held. In a case in which the position on the surface of the GA steel sheet for which the temperature is intended to be measured is in a region in which the radiation luminance of the GA steel sheet is small, the selection unit 22 selects two wavelengths included in a set of a combination of two wavelengths on the long wavelength side among the plurality of sets of wavelengths that are held.

The selection unit 22 determines whether the position on the surface of the GA steel sheet having a temperature that is intended to be measured is in a region in which the radiation luminance of the GA steel sheet is large or a region in which the radiation luminance is small by comparing the position on the surface of the GA steel sheet with an appropriate luminance range set in advance. The appropriate luminance range is set in advance by the setting unit 26 described above. That is, the setting unit 26 sets a luminance lower limit value $I'_{min}$ and a luminance upper limit value $I'_{max}$ in the appropriate luminance range in advance. Since the luminance lower limit value $I'_{min}$ and the luminance upper limit value $I'_{max}$ depend on the performance of the hyperspectral camera to be used, the luminance lower limit value $I'_{min}$ and the luminance upper limit value $I'_{max}$ are set according to the model of the hyperspectral camera to be used. The selection unit 22 determines whether the position on the surface of the GA steel sheet having a temperature that is intended to be measured is in a region in which the radiation luminance of the GA steel sheet is large or a region in which the radiation luminance of the GA steel sheet is small by comparing with the appropriate luminance range set in advance. In a case in which the selection unit 22 determines that the position on the surface of the GA steel sheet having a temperature that is intended to be measured is in a region in which the radiation luminance of the GA steel sheet is large, the selection unit selects two wavelengths included in a set in which two wavelengths on the short wavelength side are combined, from among the plurality of sets of wavelengths that are held, such that the radiation luminance of the GA steel sheet acquired by the imaging unit 12 falls within the appropriate luminance range set in advance. In addition, in a case in which the selection unit 22 determines that the position on the surface of the GA steel sheet having a temperature that is intended to be measured is in a region in which the radiation luminance of the GA steel sheet is small, the selection unit selects two wavelengths included in a set in which two wavelengths on the long wavelength side are combined, from among the plurality of sets of wavelengths that are held, such that the radiation luminance of the GA steel sheet acquired by the imaging unit 12 falls within the appropriate luminance range set in advance. The selection unit 22 selects, as the two wavelengths, a wavelength shorter than the wavelength at which the radiation luminance indicated by the Wien displacement law at the temperature of the GA steel sheet becomes maximum.

Note that the region in which the radiation luminance of the GA steel sheet is large corresponds to a region in which alloying of the surface of the GA steel sheet has progressed, and may be, for example, a region in which the emissivity is about from 0.1 to 0.3. In addition, the region in which the radiation luminance of the GA steel sheet is small corresponds to a region in which alloying of the surface of the GA steel sheet has not progressed, and may be, for example, a region in which the emissivity is about from 0.7 to 0.9.

In the case of a GA steel sheet in the alloying process, in the alloying process, the surface roughness changes and the emissivity that was about 0.2 before alloying changes to about 0.8 after alloying. Therefore, even if the temperature is uniform, the radiation luminance is small in a part where alloying has not progressed, and the radiation luminance is large in a part where alloying has progressed, and the difference in the radiation luminance is four times. Therefore, in the GA steel sheet in the alloying process, by setting the set of wavelengths on the long wavelength side in the region in which the alloying has not progressed, and using the set of wavelengths on the short wavelength side in the region in which the alloying has progressed, a situation in which the luminance necessary for the temperature measurement is not obtained due to the small luminance in the region in which the alloying has not progressed, or the luminance is saturated due to the too strong luminance in the region in which the alloying has progressed does not occur, and the luminance can be kept within the dynamic range (appropriate range) of the imaging unit. Thus, the temperature distribution in the sheet width direction can be measured accurately and stably.

As described above, the reference of the detection wavelength in the case of the measurement target having a large difference in emissivity depending on the position can be calculated as follows.

Assuming that the shortest wavelength of the detection wavelength at the temperature T [K] is $\lambda_{min}$ and the longest wavelength is $\lambda_{max}$, the emissivity variation ratio (emissivity after change/emissivity before change, in case of GA steel sheet 4) is equal to the ratio $L_b(\lambda_{max}, T)/L_b(\lambda_{min}, T)$ of the radiation luminance. Note that $L_b(\lambda, T)$ is radiation luminance at temperature T and wavelength $\lambda$ in black-body radiation. That is, assuming that the emissivity variation ratio is $r_e$, by satisfying Formulas (7) and (8), the temperature can be stably measured even if the emissivity greatly varies depending on the position (that is, the position in the hyperspectral image) in the field of view. That is, it is understood that a wavelength that satisfies this wavelength range may be selected by using a hyperspectral camera.

[Math. 4]

$$\frac{L_b(\lambda_{max}, T)}{L_b(\lambda_{min}, T)} > r_e \qquad\qquad (7)$$

$$L_b(\lambda, T) = \frac{2c_1}{\lambda^5} \frac{1}{exp(c_2/\lambda T) - 1} \qquad\qquad (8)$$

For example, the selection unit 22 holds a set on the short wavelength side including two wavelengths on the short wavelength side and a set on the long wavelength side including two wavelengths on the long wavelength side. In this case, assuming that a first wavelength, a second wavelength, a third wavelength, and a fourth wavelength are arranged in this order from the shorter wavelength side, the set on the shorter wavelength side includes the first wavelength and the second wavelength, and the set on the longer wavelength side includes the third wavelength and the fourth wavelength. In this case, the second wavelength and the third wavelength may be the same or different.

In addition, the combination of wavelengths may be changed if appropriate, for example, the set on the short wavelength side is configured with the first wavelength and the third wavelength, and the set on the long wavelength side is configured with the second wavelength and the fourth wavelength, as long as it is in the gist of the technique of the disclosure to prevent that luminance required for temperature measurement cannot be obtained due to low luminance in a region in which alloying has not progressed, or luminance is too high and saturated in a region in which alloying has progressed, by using the long wavelength side in a region in which alloying has not progressed and using the short wavelength side in a region in which alloying has progressed.

As described above, in the process of alloying the GA steel sheet, the radiation luminance monotonically increases as the wavelength increases even at the same temperature. In the imaging unit 12, saturation of the radiation luminance is likely to occur at the fourth wavelength, and insufficiency of the radiation luminance is likely to occur at the first wavelength. Therefore, there may be a case in which measurement can be performed even if the second wavelength and the third wavelength are the same or the combination of wavelengths is changed, and thus, it is possible to use the same wavelength or change the combination of wavelengths in this manner.

Using the radiation luminance of the GA steel sheet acquired by the imaging unit 12 at the two wavelengths selected by the selection unit 22, the calculation unit 24 calculates the temperature at each position on the surface of the GA steel sheet by two-color radiation temperature measurement.

Here, in a case in which the temperature of the GA steel sheet as a measurement target greatly fluctuates on the exit side of the heating furnace or the like, in the above-described method (method of comparing whether the radiation luminance of the GA steel sheet is in a large region or a small region with the appropriate luminance range set in advance, thereby obtaining the radiation luminance at two wavelengths selected such that the radiation luminance falls within the appropriate luminance range set in advance), in some cases, the radiation luminance (also referred to as "one set of wavelengths" below) at two different wavelengths within an appropriate range is not obtained in a range (for example, the total sheet width of the steel sheet at a specific length position in the length direction of the steel sheet) in which images are simultaneously imaged. For example, in a case in which the temperature of the steel sheet is very low or the temperature of the steel sheet is very high (alternatively, in a case in which alloying has not progressed or in a case in which alloying has progressed) at a width position of a part of the sheet width, the radiation luminance at the position is out of the appropriate range. As a result, in some cases, the temperature of the steel sheet at the width position cannot be calculated. Even if one set of wavelengths within the appropriate range can be measured, the two wavelengths have to be very close, and the calculated temperature of the steel sheet may be inaccurate. In such a case, it is necessary to adjust the sensitivity of the imaging element or the exposure time of the hyperspectral camera for detecting the radiation luminance according to the temperature distribution in the sheet width direction of the steel sheet. As the sensitivity adjustment, it is conceivable to adjust an analog gain when a luminance value is read from the imaging element, or to control an exposure amount (at least one of the exposure time and the aperture).

For example, in a case in which a temperature of 400°C to 600°C is measured by detecting the radiation luminance at a near-infrared wavelength of 1500 nm, the radiation luminance is doubled every time the temperature rises by 50°C. Therefore, in order to secure a measurement range of 200°C, the measured radiation luminance needs to be within an appropriate range even if the radiation luminance changes 16 times. In this case, when the minimum luminance for correctly calculating the temperature is required to be about 500, the imaging element needs not to be saturated at least up to the radiation luminance of 8000. However, in general, a two-dimensional imaging element has a narrow dynamic range (appropriate range of radiation luminance), and in the case of 12 bits, for example, saturation occurs with a luminance upper limit value of about 4000. Therefore, in actual measurement, it is desirable to control the sensitivity of the imaging element (for example, by changing the exposure time) and to secure the detection intensity capable of accurately calculating the temperature.

At this time, since at least any one set of wavelengths needs to be able to detect the radiation luminance at any position in the sheet width direction to be measured, it is necessary to satisfy the condition (also simply referred to as a "condition" below) that the range from the minimum luminance to the maximum luminance of the GA steel sheet can be detected at any of the wavelengths included in the entire set in a case in which all sets of wavelengths are viewed. Specifically, a spectral camera having a ratio of the radiation luminance detected at the shortest wavelength and the radiation luminance detected at the longest wavelength at the measurement temperature larger than the maximum rate of change in emissivity (0.8/0.2=4 in the case of the GA steel sheet) may be used, and control may be performed such that the radiation luminance at (the wavelength on the short wavelength side included in) the set of wavelengths on the long wavelength side is equal to or greater than the minimum luminance, and such that the radiation luminance at (the wavelength on the long wavelength side included in) the set of wavelengths on the short wavelength side does not exceed the luminance upper limit value. In this manner, in a case in which the radiation luminance in the set of wavelengths on the long wavelength side is not saturated, the set of wavelengths on the long wavelength side is used, and in a case in which the radiation luminance in the set of wavelengths on the long wavelength side is saturated, the temperature can be calculated using the set of wavelengths on the short wavelength side. Note that the condition mentioned here only needs to be satisfied at the time when the set of all wavelengths is viewed, and is not necessarily satisfied at the time before and after that time.

The two-color radiation temperature measurement generally refers to a method of calculating a temperature from radiation luminance obtained at two wavelengths in a case in which a ratio (emissivity ratio) of emissivities at two wavelengths is fixed or can be regarded as fixed. However, in the technique of the disclosure, it is assumed that not only such a case but also a case in which the emissivity ratio is not constant but is variable (according to the progress of reaction or the like) is also referred to as two-color radiation temperature measurement. In the temperature measurement according to the present embodiment, it is desirable to examine, in advance, what value the emissivity ratio takes depending on the wavelength to be used (set of wavelengths to be used).

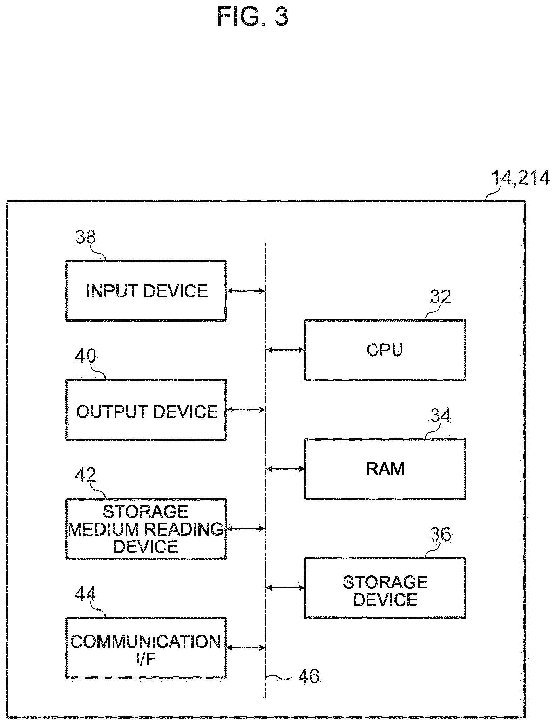

Fig. 3 is a block diagram showing a hardware configuration of the arithmetic processing unit 14. As shown in Fig. 3, the arithmetic processing unit 14 includes a central processing unit (CPU) 32, a random access memory (RAM) 34, a storage device 36, an input device 38, an output device 40, a storage medium reading device 42, a communication interface (I/F) 44, and a bus 46. The bus 46 is a signal line that connects the CPU 32, the RAM 34, the storage device 36, the input device 38, the output device 40, the storage medium reading device 42, and the communication I/F 44 to be able to communicate with each other.

The storage device 36 stores a program for performing temperature measurement processing which will be described later. The CPU 32 is a central processing unit, and executes various programs and controls each configuration. That is, the CPU 32 reads the program from the storage device 36 and executes the program by using the RAM 34 as a work area. The CPU 32 performs control of each configuration and various types of arithmetic processing according to the program stored in the storage device 36.

The RAM 34 temporarily stores programs and data as a work area. The storage device 36 includes a read only memory (ROM), a hard disk drive (HDD), a solid state drive (SSD), or the like, and stores various programs including an operating system and various types of data.

The input device 38 is a device that performs various inputs, such as a keyboard and a mouse. The output device 40 is, for example, a device that outputs various types of information, such as a display and a printer. A touch panel display may be adopted as the output device 40 and function as the input device 38.

The storage medium reading device 42 reads data stored in various storage media such as a compact disc (CD)-ROM, a digital versatile disc (DVD)-ROM, a Blu-ray disc, and a universal serial bus (USB) memory, writes data to the storage medium, and the like. The communication I/F 44 is an interface for communicating with other devices in a wired or wireless manner, and for example, standards such as Ethernet (registered trademark), FDDI, or Wi-Fi (registered trademark) are used.

The CPU 32, the RAM 34, and the storage device 36 constitute a computer. The computer may be configured as a sub-computer that controls a part of the operation of the temperature measurement apparatus 10, or may be configured as a main computer that controls the entire operation of the temperature measurement apparatus 10. For a part or the entirety of the computer, for example, an integrated circuit such as a large scale integration (LSI) or an integrated circuit (IC) chip set may be used. The integration of the computer is not limited to the LSI, and a dedicated circuit or a processor may be used. In addition, the processor here is a processor in a broad sense, and may be a general-purpose processor, or may include a dedicated processor such as a graphics processing unit (GPU), an application specific integrated circuit (ASIC), or a field programmable gate array (FPGA). In addition, the operation of the processor may be performed not only by one processor but also by a plurality of processors existing at physically separated positions in cooperation.

(Description of Temperature Measurement Method)

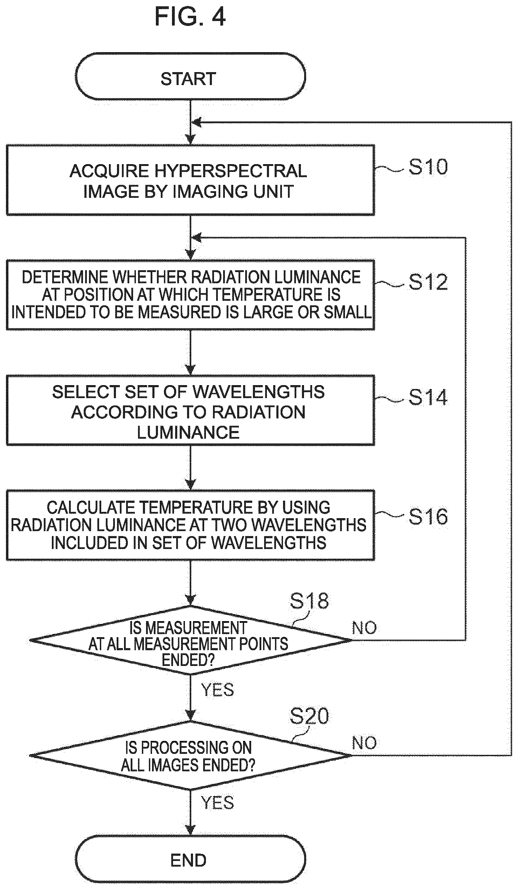

Fig. 4 is a flowchart showing a flow of temperature measurement processing performed by the CPU 32 of the arithmetic processing unit 14. When the CPU 32 reads a program for performing the temperature measurement processing from the storage device 36, loads the program into the RAM 34, and executes the program, the CPU 32 functions as each functional unit of the arithmetic processing unit 14, and the temperature measurement processing shown in Fig. 4 is performed. As a result, the temperature measurement method is performed in the temperature measurement apparatus 10.

In Step S10, the selection unit 22 acquires a hyperspectral image imaged by the imaging unit 12. Then, in Step S12, the selection unit 22 determines whether the position (measurement point) on the GA steel sheet at which the temperature is intended to be measured is in a region in which the radiation luminance is large or a region in which the radiation luminance is small, and the process proceeds to Step S14. When this determination is made, from the hyperspectral image, the magnitude of the radiation luminance at a predetermined any wavelength $\lambda_i$ at this measurement point can be used as a criterion for the determination. For example, in a case in which the radiation luminance at the wavelength $\lambda_i$ at the measurement point is equal to or greater than a predetermined threshold value, it may be determined that the measurement point is in a region in which the radiation luminance is large. In a case in which the radiation luminance is equal to or less than a predetermined (another) threshold value, it may be determined that the measurement point is in a region in which the radiation luminance is small. As the threshold value, for example, a threshold value may be obtained in advance such that, in a case in which the emissivity is from 0.1 to 0.3 (that is, in a case of a region in which alloying has not progressed), the measurement point is determined to be in the region in which the radiation luminance is large, and, in a case in which the emissivity is from 0.7 to 0.9 (that is, in the case of a region in which alloying has progressed), the measurement point is determined to be in the region in which the radiation luminance is small. As the threshold value other than this, for example, a predetermined appropriate range of radiation luminance (specifically, the luminance lower limit value $I'_{min}$ and the luminance upper limit value $I'_{max}$) may be used according to the model of the hyperspectral camera or the like.

In Step S14, (i) in a case in which it is determined in Step S12 that the measurement point is in the region in which the radiation luminance is large, a set on the short wavelength side (that is, two wavelengths having a short wavelength) is selected as the two wavelengths to be used for temperature calculation from among the plurality of sets of wavelengths held by the selection unit 22. (ii) In a case in which it is determined in Step S12 that the measurement point is in the region in which the radiation luminance is small, a set on the long wavelength side (that is, two wavelengths on the long wavelength side) is selected as the two wavelengths to be used for temperature calculation from among the plurality of sets of wavelengths held by the selection unit 22.

Then, in Step S16, the calculation unit 24 calculates the temperature at the measurement point on the surface of the GA steel sheet by the two-color radiation temperature measurement method, by using the radiation luminance at the two wavelengths selected in Step S14. Note that the radiation luminance (two) at the two wavelengths selected in Step S14 can be acquired from the luminance value of the hyperspectral image imaged by the imaging unit 12.

Then, in Step S18, the calculation unit 24 determines whether or not to end the processing on the hyperspectral image as a current processing target. For example, since the processing is performed for each measurement point in Steps S12 to S16, in Step S18, in a case in which it is detected that the measurement point reaches the end of the hyperspectral camera for the hyperspectral image acquired in Step S10, it is determined that the processing for all the measurement points in the hyperspectral image has ended, and the processing proceeds to Step S20. In a case in which it is determined that the processing for all the measurement points has not been ended and the processing for the hyperspectral image as the current processing target cannot be ended, the processing returns to Step S12, the measurement point is changed, and then the processes of Step S14 and subsequent steps are executed.

Then, in Step S20, it is determined whether or not all the hyperspectral images to be measured have been processed. In a case in which the processing has not been performed, the processing returns to Step S10, and the hyperspectral image is acquired again by changing the imaging position or the like, and then the processes of Step S12 and subsequent steps are executed. In a case in which it is determined in Step S20 that all the hyperspectral images to be measured have been processed, the temperature measurement processing ends. Step S10 is an example of a "luminance acquisition step" according to the technique of the disclosure, and Steps S12 to S16 are an example of a "temperature calculation step" according to the technique of the disclosure.

(Effects of Temperature Measurement Apparatus)

As described above, the temperature measurement apparatus according to the first embodiment calculates the temperature at each position on the surface of the GA steel sheet by the two-color radiation temperature measurement method using the two wavelengths while changing the combination of the two wavelengths according to the radiation luminance of the GA steel sheet. Specifically, two wavelengths on the short wavelength side are selected from a plurality of wavelengths for the measurement point in the region in which the radiation luminance is large, and two wavelengths on the long wavelength side are selected from the plurality of wavelengths for the measurement point in the region in which the radiation luminance is small, thereby calculating the temperature. As a result, it is possible to measure the temperature distribution of a target having an emissivity that changes in a wide range, with high response and high accuracy.

<Second Embodiment>

(Description of Configuration of Temperature Measurement Apparatus)

Next, a second embodiment will be described. In a temperature measurement apparatus according to the second embodiment, the same components as those of the temperature measurement apparatus 10 according to the first embodiment are denoted by the same reference signs, and a detailed description thereof will be omitted.

As shown in Fig. 1, a temperature measurement apparatus 210 according to the second embodiment includes an imaging unit 12 and an arithmetic processing unit 214.

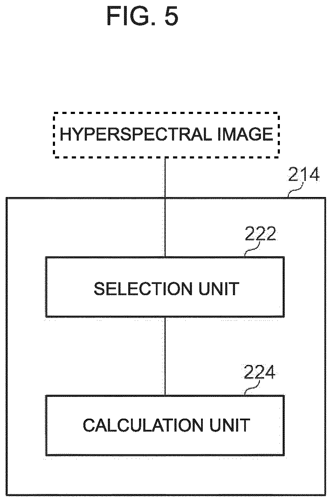

The arithmetic processing unit 214 is a functional unit that calculates the temperature of a GA steel sheet based on a hyperspectral image imaged by the imaging unit 12, and is realized by a hardware configuration (Fig. 3) similar to that of the first embodiment. The arithmetic processing unit 214 functionally includes a selection unit 222 and a calculation unit 224 as shown in Fig. 5.

The selection unit 222 divides the field of view (that is, the range of the hyperspectral image) of the imaging unit 12 into a plurality of sections along the sheet width direction of the GA steel sheet, and obtains a wavelength range in which the imaging unit 12 can acquire the radiation luminance of the GA steel sheet for each section. Then, for each section, the selection unit 222 selects two wavelengths from the wavelength range in which the radiation luminance can be acquired (that is, saturation of the luminance value or insufficiency of the luminance value does not occur).

Note that the section can be determined by any length. In the range of one section, it is preferable to determine the section such that the alloying degree of the GA steel sheet within the range does not become too large, that is, the radiation luminance does not change too much. For example, the distribution (width direction resolution) of temperature measurement points in the sheet width direction is not particularly limited, but may be, for example, 5 mm or less. In addition, the measured length of the GA steel sheet in the conveyance direction is not particularly limited, but may be, for example, about 5 mm.

In addition, the range (that is, the range in which the temperature is to be measured) in the sheet width direction of the GA steel sheet divided into the plurality of sections is preferably the entire range in the sheet width direction. The entire range in the sheet width direction can be detected by first acquiring a hyperspectral image, detecting edge positions on both sides in the sheet width direction of the GA steel sheet from the hyperspectral image, and ascertaining a range in which the GA steel sheet exists on the hyperspectral image, based on the detected edge positions. As a method of detecting the edge position, for example, a method of differentiating the distribution of the radiation luminance in the sheet width direction and searching for the maximum value and the minimum value can be used. Note that the method for identifying both edge positions in the sheet width direction in the present embodiment is also applicable to other embodiments.

As described above, the detector that is a two-dimensional imaging element provided in the hyperspectral camera can instantaneously acquire two-dimensional luminance information (luminance value) incident from the GA steel sheet. When the luminance value exceeds an appropriate detection range of the detector, the measured value falls within a saturated range. Therefore, the upper limit of the detectable luminance value is determined. Therefore, it is necessary to perform adjustment such that a luminance value that does not exceed the upper limit is detected. In addition, in order to accurately calculate the temperature, it is necessary to detect the luminance value of a certain degree or more, and a lower limit of the luminance value to be detected is also determined. Therefore, it is necessary to perform adjustment such that a luminance value exceeding the lower limit is detected. In other words, in a case in which the adjustment is not sufficient, the luminance value at a certain measurement point exceeds the upper limit or the lower limit of the detector, and a measurement error occurs, it can be said that the wavelength at which such a luminance value is measured cannot be used to measure the temperature at this measurement point. Conversely, in the case of a wavelength at which some pieces of measurement data are obtained, the luminance value does not exceed the upper limit or the lower limit of the detector, and can be used for temperature measurement.

Therefore, in the present embodiment, the field of view of the hyperspectral camera is divided into a plurality of small sections along the width direction thereof, in which it can be considered that there is not much difference in the degree of alloying, by taking advantage of the feature that the spectral spectrum can be obtained in a wide wavelength band of the hyperspectral camera, and for each section, two wavelengths are selected from the wavelengths at which the luminance can be acquired (that is, the luminance value does not exceed the upper limit or does not fall below the lower limit of the detector). As a result, it is possible to stably and accurately measure the temperature.

The calculation unit 224 calculates the temperature at each position on the surface of the GA steel sheet by two-color radiation temperature measurement, by using the radiation luminance of the GA steel sheet acquired by the imaging unit 12 at the two wavelengths selected by the selection unit 222 for each section.

(Description of Temperature Measurement Method)

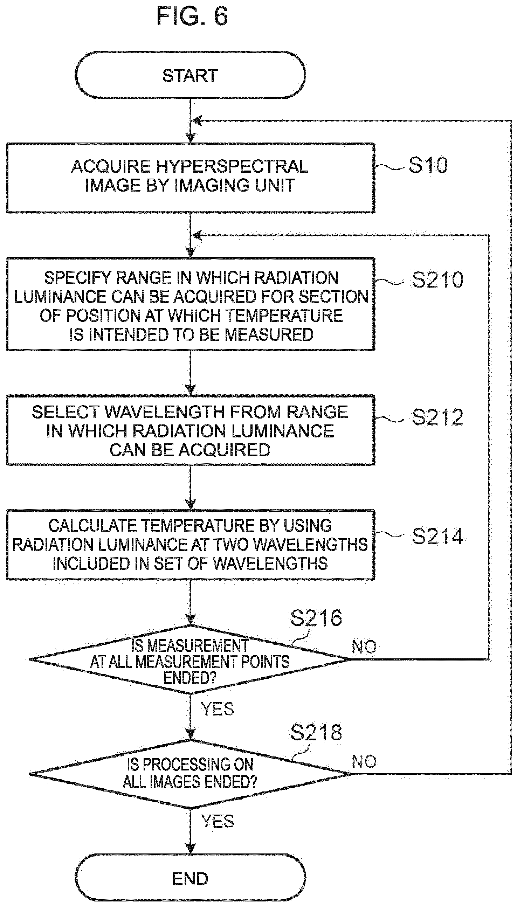

Fig. 6 is a flowchart showing a flow of temperature measurement processing performed by a CPU 32 of the arithmetic processing unit 214. When the CPU 32 reads a program for performing the temperature measurement processing from the storage device 36, loads the program into the RAM 34, and executes the program, the CPU 32 functions as each functional unit of the arithmetic processing unit 214, and the temperature measurement processing shown in Fig. 6 is performed. As a result, the temperature measurement method is performed in the temperature measurement apparatus 210.

In Step S10, the selection unit 222 acquires a hyperspectral image imaged by the imaging unit 12. Then, in Step S210, the selection unit 222 specifies a wavelength range in which the radiation luminance can be acquired, for each of a plurality of sections in the field of view of the imaging unit 12. More specifically, the selection unit 222 specifies a range in which the radiation luminance can be acquired for the section including the position (measurement point) where the temperature is intended to be measured.

Then, in Step S212, the selection unit 222 selects two wavelengths $\lambda_A$ and $\lambda_B$ from the specified wavelength range for each section. Then, in Step S214, the calculation unit 224 calculates the temperature of the surface of the GA steel sheet by the two-color radiation temperature measurement method, by using the radiation luminance $E_A$ and $E_B$ at the selected two wavelengths $\lambda_A$ and $\lambda_B$ for each section.

Then, in Step S216, the calculation unit 224 determines whether or not to end the processing on the hyperspectral image as a current processing target. In a case in which the processing is ended, the processing proceeds to Step S218, and in a case in which the processing is not ended, the processing returns to Step S210, the measurement point is changed, and then the processes of Step S210 and subsequent steps are executed.

Then, in Step S218, it is determined whether or not all the hyperspectral images to be measured have been processed. In a case in which the processing has not been performed, the processing returns to Step S10, and the hyperspectral image is acquired again by changing the imaging position or the like, and then the processes of Step S12 and subsequent steps are executed. In a case in which it is determined in Step S218 that all the hyperspectral images to be measured have been processed, the temperature measurement processing ends. Steps S210 to S214 are examples of the "temperature calculation step" according to the technique of the disclosure.

(Effects of Temperature Measurement Apparatus)

As described above, in the temperature measurement apparatus according to the second embodiment, the field of view of the imaging unit is divided into a plurality of sections along the sheet width direction of the GA steel sheet, and the wavelength range in which the imaging unit can acquire the radiation luminance of the GA steel sheet is obtained for each section. Then, for each section, two wavelengths are selected from the wavelength range in which the radiation luminance can be acquired, and the temperature is calculated. As a result, it is possible to measure the temperature distribution of a target having an emissivity that changes in a wide range, with high response and high accuracy.

(Regarding More Preferred Embodiments)

As described above in detail, in a case in which the temperature distribution in the width direction of the GA steel sheet is measured by using the hyperspectral camera, there are a problem that the luminance value of a low emissivity part can be appropriately detected, but the luminance value of a high emissivity part is saturated and cannot be detected, and a problem that the luminance value of the high emissivity part can be appropriately detected, but the detection intensity of the low emissivity part is insufficient and the luminance value cannot be accurately detected. In order to solve the problems, in a more preferred form, a range for measuring a temperature distribution is determined in the sheet width direction of a GA steel sheet, the field of view of an imaging unit 12 is divided into a plurality of sections along the sheet width direction of the GA steel sheet, an appropriate luminance range is set according to performance of a hyperspectral camera to be used, an exposure amount is adjusted such that the radiation luminance of the GA steel sheet acquired by the imaging unit 12 falls within the appropriate luminance range, a wavelength range in which the imaging unit 12 can acquire the radiation luminance of the GA steel sheet is obtained for each section, two wavelengths are selected from the ranges of wavelengths in which the radiation luminance can be acquired (that is, saturation of the luminance value or insufficiency of the luminance value does not occur) for each section, and the temperature at each position on the surface of the GA steel sheet is calculated by two-color radiation temperature measurement, by using the radiation luminance of the GA steel sheet acquired by the imaging unit 12 at the selected two wavelengths for each section.

<Examples>

Examples for the GA steel sheet in the alloying process will be described.

(Specification Required for Sensor and Used Hyperspectral Camera)

Table 1 shows required specifications of the temperature measurement apparatus. The temperature of the GA steel sheet set as a target in the alloying process is from 400°C to 600°C, and the emissivity changes from about 0.2 (before alloying) to about 0.8 (after alloying) due to alloying. This is because molten zinc has metallic luster, but after alloying, becomes solid and a rough surface is obtained simultaneously with the generation of a FeZn compound. In order to be able to ascertain the relationship with the plating quality at each part of the steel sheet that is alloyed while being passed through, the distribution of the temperature measurement points in the sheet width direction (width direction resolution) was set to 5 mm or less, a temperature measurement cycle in the sheet width direction (response speed) was set to 20 Hz, and measurement accuracy was targeted to have a difference of $\pm 10°C$ from the measured value.

[Table 1]

| Item | Required specifications |
|---|---|
| Measurement target | Sheet width: 600 to 1650 nn<br>Temperature: 400°C to 600°C, Emissivity: 0.2 to 0.8 |
| Measurement | Response speed: 20 Hz, Width-direction resolution: 5 mm or less |
| performance | Measurement accuracy: $\pm 10°C$ |

Table 2 shows specifications of a hyperspectral camera used as the imaging unit 12. As a two-dimensional imaging element, a hyperspectral camera using a photodetection element InGaAs having sensitivity from 900 nm to 1650 nm was selected in order to secure sensitivity capable of sufficiently detecting radiation light even at a target temperature of 400°C and an emissivity of 0.2. The number of CHs in the spatial direction is 640 CHs, and when a lens having an angle of view of 65° in the spatial direction is used and the distance to the measurement point is separated by 1670 mm, the field of view in the sheet width direction becomes 2000 mm, and the resolution in the sheet width direction becomes about 3 mm. The wavelength CH is 224 CHs, and a spectral spectrum can be acquired in a range of from 900 nm to 1700 nm at a pitch of 3.5 nm. The maximum frame rate is 50 fps, and the sensitivity can be controlled by setting the exposure time.

[Table 2]

| Item | Specifications |
|---|---|
| Output image | · Image size: 640 (space) $\times$ 200 (wavelength band 900 nm to 1700 nm)<br>· Image shades of gray: 4096 shades of gray (12 bits), Frame rate: 50 fps in maximum |
| Lens | Angle of view: 65°, Resolution: about 3 mm/pixel (at time of field of view of 2000 mm) |

The hyperspectral image output from the hyperspectral camera is output as an image of 640 pixels in width (spatial direction CH) $\times$ 224 pixels in height (wavelength CH) and 4096 shades of gray (12 bits), and is taken into the arithmetic processing unit 14. The arithmetic processing unit 14 calculates radiation luminance $E_i$ at a plurality of wavelengths and uses the radiation luminance $E_i$ for temperature measurement.

In the following example, an example in which two wavelengths are selected from four wavelengths acquired by the hyperspectral camera and temperature measurement is performed will be described. The number of wavelengths is not limited to four in order to widen the temperature measurement range. When the number of wavelengths is significant within the wavelength range of the hyperspectral camera, for example, six wavelengths or the like may be selected from more wavelengths.

(Selection of Wavelength)

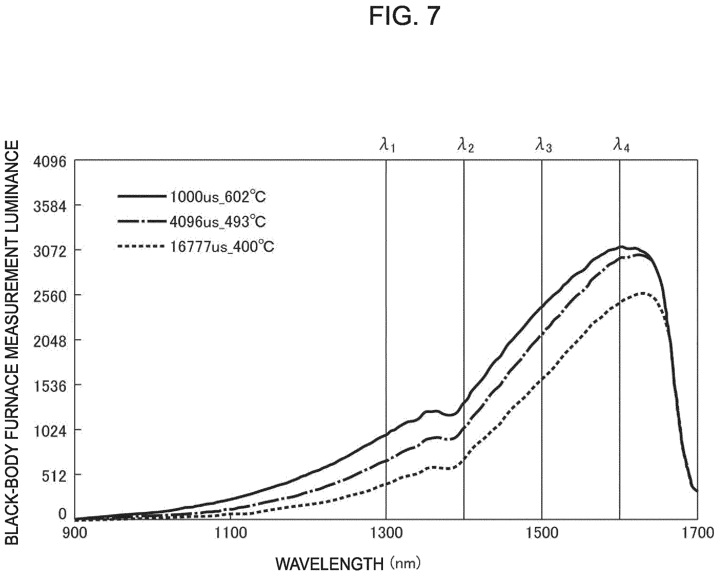

Fig. 7 illustrates a thermal radiation spectrum (black-body furnace measurement luminance for each wavelength) when black-body radiation in a black-body furnace high-temperature part is measured by the hyperspectral camera for each of about 400°C, 500°C, and 600°C included in the measurement temperature range of the GA steel sheet. Fig. 7 illustrates values after background (detected luminance value in a state where no light enters, generated by a dark current of two-dimensional imaging element) correction. The exposure time of the black-body furnace is set such that the radiation light intensity (black-body furnace measurement luminance) is substantially the same at any temperature. A temperature increase of about 100°C corresponds to an exposure time of 1/4 times. The radiation light intensity increases toward the longer wavelength side, and is maximized around 1600 nm due to the sensitivity characteristic of the use detection element (InGaAs). Four detection wavelengths: $\lambda_1$=1300 nm, $\lambda_2$=1400 nm, $\lambda_3$=1500 nm, and $\lambda_4$=1600 nm were used. In the two-color radiation temperature measurement method, sensitivity decreases when the wavelength interval is narrow. In order to secure sufficient sensitivity to satisfy the current required accuracy, a wavelength interval of 100 nm was provided. The alloying temperature is around 500°C, and $L_b$(1600 nm, 500°C)/$L_d$(1300 nm, 500°C)=5.18. This value is larger than a change ratio 4 (=0.8/0.2) of the emissivity before and after alloying, and even if unevenness of alloying exists in the field of view, temperature measurement can be performed by using any wavelength. Note that, in the extraction of the luminance value (radiation light intensity) from the hyperspectral image, an average value of a plurality of CHs (for example, 5 CHs) in a wavelength direction may be used in order to stabilize the luminance value.

(Temperature Calibration in Black-Body Furnace)

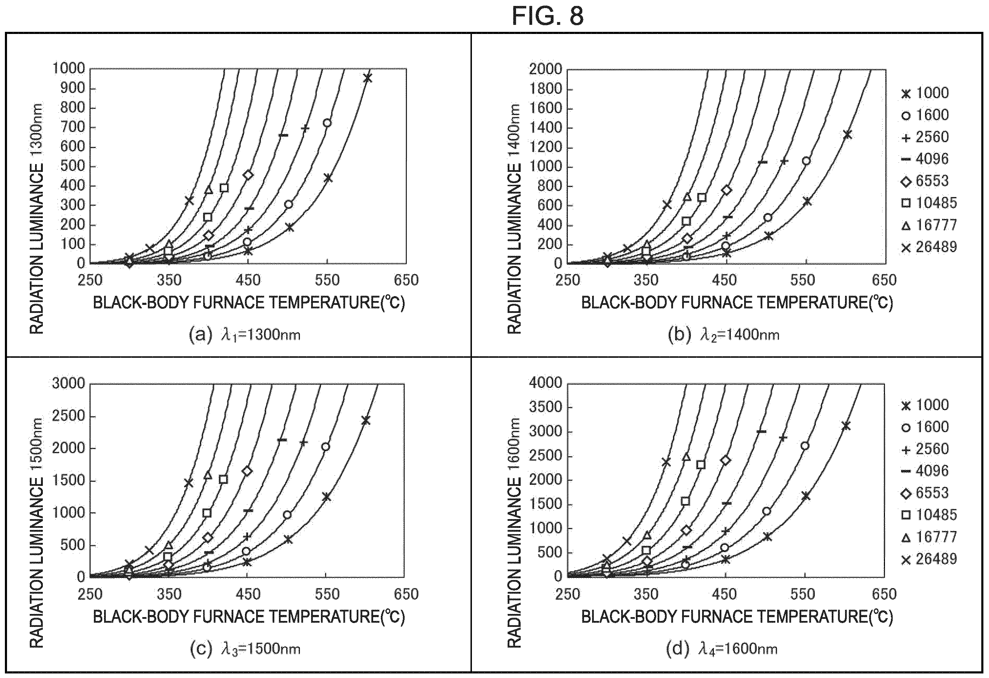

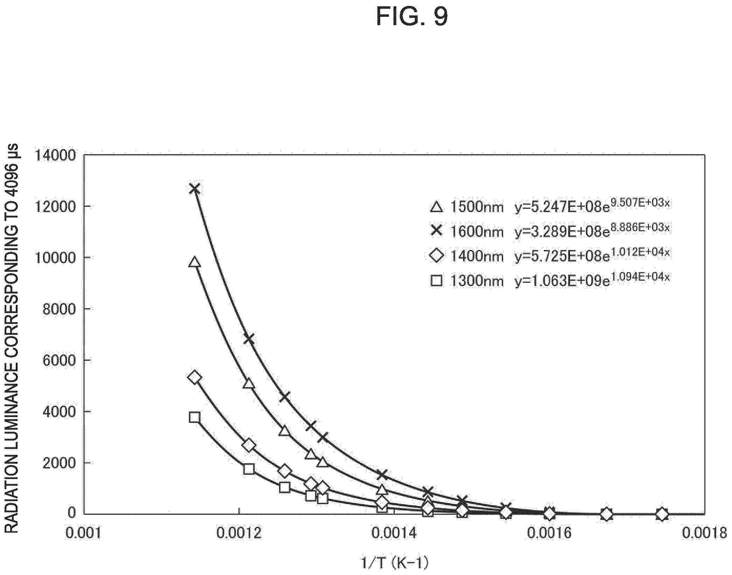

Fig. 8 shows a graph showing the relationship with the temperature by imaging the black-body furnace (T [°C] = from 300 to 600) for each set exposure time and extracting the radiation luminance at each wavelength from the hyperspectral image. The set exposure time $t_d$ [μs] is $t_d$ [μs] =1000, 1600, 2560, 4096, 6553, 10485, 16777, and 26489, and the detection wavelengths are $\lambda_1$=1300 nm, $\lambda_2$=1400 nm, $\lambda_3$=1500 nm, and $\lambda_4$=1600 nm. In Fig. 8, the background indicates a subtracted value. Since there is a case in which the background varies depending on the exposure time, a shutter is closed for each exposure time and measurement is performed as a state in which light does not enter the two-dimensional imaging element. When the exposure time is different, the sensitivity of the hyperspectral camera is different. Thus, the correlation with the temperature cannot be obtained. Therefore, the luminance value $I_i$ extracted from the hyperspectral image is converted into a value corresponding to the reference exposure time $t_{dst}$=4096 μs by Formula (9), thereby obtaining the radiation luminance $E_i$. $I_{BG}$ is background. Fig. 9 shows a result of the radiation luminance $E_i$ (corresponding to the exposure time of 4096 μs) in which the horizontal axis is arranged by 1/T.

[Math. 5]

$$E_i = (t_{dst}/t_d)(I_i - I_{BG}) \qquad (9)$$

Next, Table 3 shows results obtained by examining the relationship between the black-body furnace temperature T and the radiation luminance $E_i$ at each wavelength and obtaining the temperature calibration coefficients $\alpha_i$ and $\beta_i$ of Formula (10) by curve regression. By using the temperature calibration coefficients, conversion processing between the radiation luminance and the temperature can be performed with one calibration curve for each wavelength without using a calibration curve for each exposure time.

[Math. 6]

$$E_i = \alpha_i \exp(-\beta_i/T) \qquad (10)$$

[Table 3]

| Symbol | Measurement wavelength | $\alpha$ | $\beta$ |
|--------|------------------------|----------|---------|
| $\lambda_1$ | 1300 nm | 1.063E + 9 | 1.094E + 4 |
| $\lambda_2$ | 1400 nm | 5.725E + 8 | 1.012E + 4 |
| $\lambda_3$ | 1500 nm | 5.247E + 8 | 9.507E + 3 |
| $\lambda_4$ | 1600 nm | 3.289E + 8 | 8.886E + 3 |

(Verification of Temperature Measurement Accuracy)

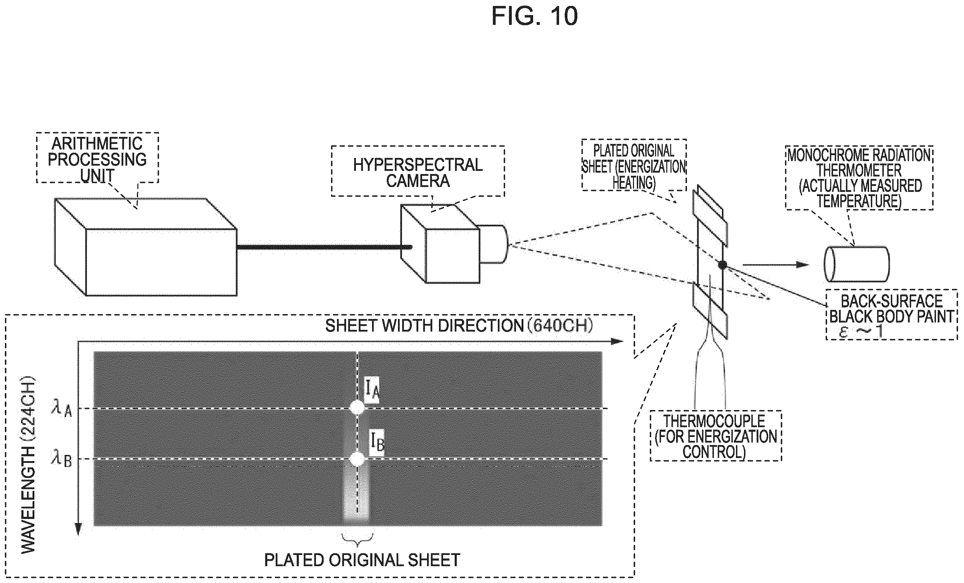

In order to verify the measurement accuracy of temperature measurement in the examples, the non alloyed zinc coted sheet was heated to alloying temperature with a base iron by direct resistance heating, and the thermal radiation spectrum at that time was measured with a hyperspectral camera, whereby the temperature measurement performance in the alloying process was evaluated. The non alloyed zinc coted sheet is a steel sheet obtained by applying molten zinc to a mild steel sheet having a thickness of 0.4 mm and solidifying the molten zinc as it is. Fig. 10 shows a configuration of a test apparatus. The non alloyed zinc coted sheet is heated to an alloying temperature (around 500°C) by energization heating, maintained at a constant temperature and alloyed, and the radiation intensity at the time of alloying is measured with a hyperspectral camera. At this time, the right back of the measurement point was painted with a black body paint, and measured with a radiation thermometer to obtain an actually measured temperature, and the measured temperature was compared with a temperature value measured by the hyperspectral camera.

(Method of Calculating Temperature)

A method of calculating the temperature at a certain position in the sheet width direction of the GA steel sheet in the present embodiment will be described.

First, the radiation luminance $E_i$ of a temperature measurement site is acquired from a hyperspectral image. Specifically, the luminance value $I_i$ at a wavelength $\lambda_i$ (i=1, 2, 3, 4) at a temperature measurement position is extracted from the obtained two-dimensional hyperspectral image. Then, the luminance value $I_i$ is converted into a value corresponding to the reference exposure time $t_{dst}$=4096 $\mu$s by Formula (9), thereby acquiring the radiation luminance $E_i$.

Then, the apparent temperature $T_e$ and the apparent emissivity $\varepsilon_e$ in a case in which the emissivities at the wavelengths are equal are calculated. Specifically, the radiation luminance $E_A$ and $E_B$ of the two wavelengths $\lambda_A$ and $\lambda_B$ are selected from the calculated radiation luminance $E_i$, and the temperature and the emissivity when it is assumed that the emissivities at both wavelengths are equal are calculated. More specifically, since the relationship between the apparent temperature $T_e$ and the intensity ratio R (=$E_A/E_B$) is expressed by Formula (11), the apparent temperature $T_e$ can be calculated by Formula (12). Further, the apparent emissivity $\varepsilon_e$ is calculated by Formula (13) using the calculated apparent temperature $T_e$.

[Math. 7]

$$R = \frac{E_A}{E_B} = \frac{\alpha_A \exp(-\beta_A/T_e)}{\alpha_B \exp(-\beta_B/T_e)} = \frac{\alpha_A}{\alpha_B} \exp\left\{\frac{\beta_B - \beta_A}{T_e}\right\} \qquad (11)$$

$$T_e = \frac{(\beta_B - \beta_A)}{\ln(E_A/E_B) - \ln(\alpha_A/\alpha_B)} \qquad (12)$$

$$\varepsilon_e = \frac{E_A}{\alpha_A \exp(-\beta_A/T_e)} \qquad (13)$$

Then, the actual emissivity $\varepsilon_A$ is calculated by an approximate expression of Formula (14). Specifically, when a=$A_1(1/\lambda_A-1/\lambda_B)$ and b=$\lambda_B/(\lambda_B-\lambda_A)$, $\varepsilon_A$ is calculated by Formula (14) using $\varepsilon_e$. Here, $A_1$ is a value obtained in advance by an experiment. In the case of a GA steel sheet, $A_1$=0.10.
[Math. 8]

$$\varepsilon_A = \frac{ab + \varepsilon_e + \sqrt{(ab + \varepsilon_e{}^2)^2 - 2a^2 b(b-1)}}{2} \qquad (14)$$

Finally, the actual temperature T is calculated by using the calculated emissivity $\varepsilon_A$. Specifically, the temperature T is calculated by Formula (16) obtained by converting Formula (15) and by using the temperature calibration coefficients $\alpha_i$ and $\beta_i$, the calculated emissivity $\varepsilon_A$, and the radiation luminance $E_A$.

[Math. 9]

$$E_A = \varepsilon_A \alpha_A \exp(-\beta_A/T) \qquad (15)$$

$$T = \frac{-\beta_A}{\ln(E_A/\varepsilon_A) - \ln(\alpha_A)} \qquad (16)$$

(Effects of Calculation by Approximate Expression)

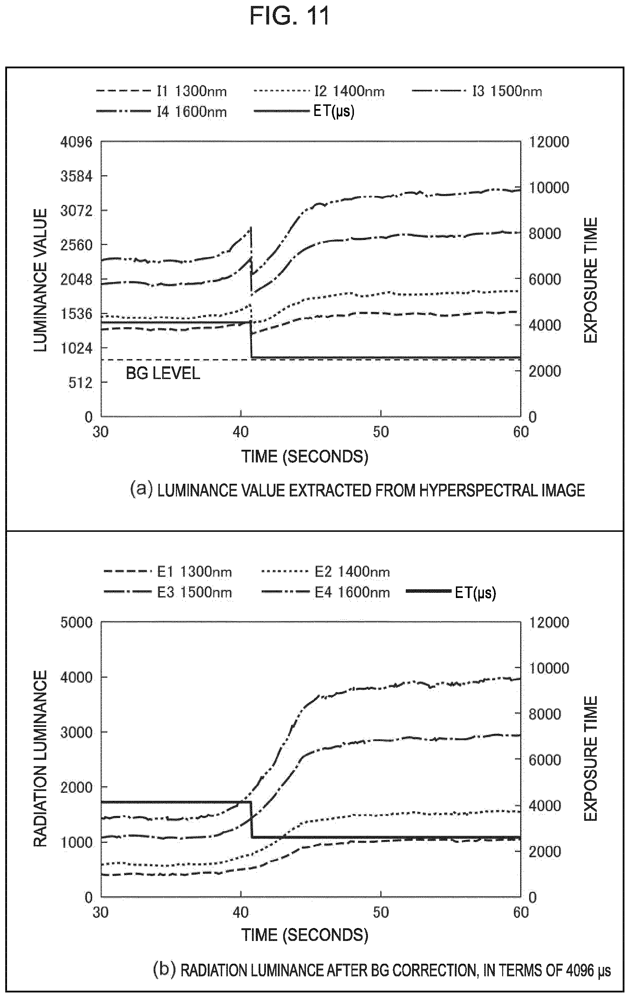

Fig. 11 shows the results of measuring the luminance values at the wavelengths $\lambda_1$ to $\lambda_4$ at a constant temperature of 530°C and adjusting the exposure time such that the wavelength $\lambda_4$ having the maximum intensity is not saturated in the alloying process. Fig. 11(a) shows a luminance value extracted from the hyperspectral image, and Fig. 11(b) shows radiation luminance obtained by performing background correction and conversion corresponding to the reference exposure time (4096 $\mu$s). ET indicates the exposure time (unit: $\mu$s). I1 to I4 indicate luminance values at the respective wavelengths. E1 to E4 indicate radiation luminance at the respective wavelengths. As shown in Fig. 11(a), since the emissivity increased and the luminance value increased in the alloying process, the exposure time was changed from 4096 $\mu$s to 2560 $\mu$s such that the radiation luminance did not deviate from the appropriate range when the time on the horizontal axis in Fig. 11(a) was around 41 seconds. Accordingly, the luminance values at the wavelengths $\lambda_1$ to $\lambda_4$ are reduced according to the change ratio of the exposure time. Referring to Fig. 11(b), by performing conversion corresponding to the reference exposure time (4096 $\mu$s), a continuously changed luminance value can be obtained. Therefore, it is possible to perform processing of temperature calculation by Formula (10).

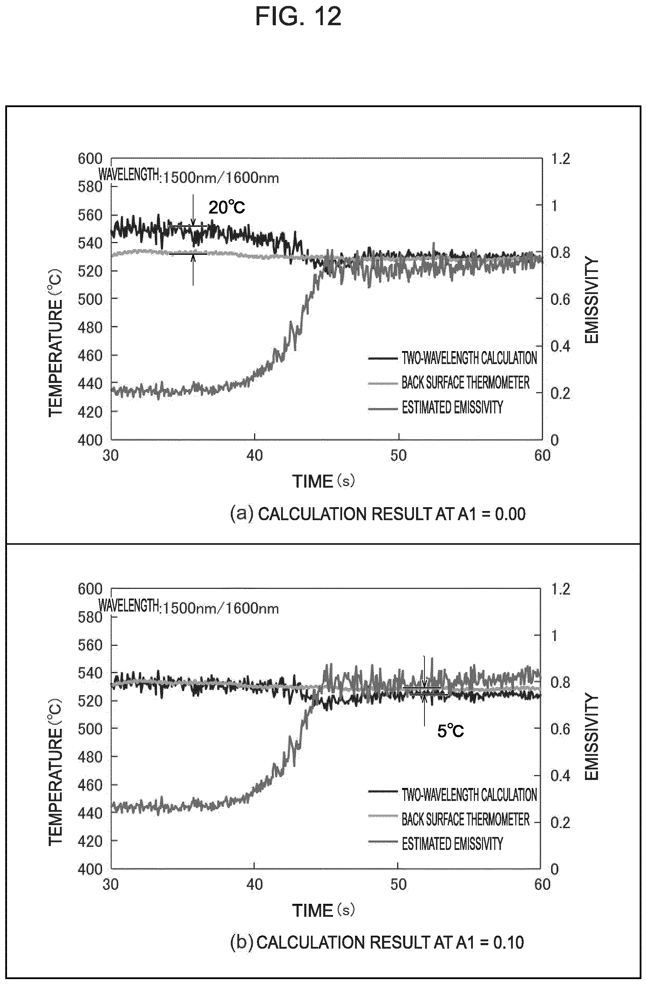

Fig. 12 shows calculation results of the temperature and the emissivity. It can be understood that the emissivity has changed from about 0.2 before alloying to about 0.8 after alloying. For reference, Fig. 12 shows, as a back surface thermometer, temperature measurement results at the same width position (on the back surface side opposite to the surface of the steel sheet imaged by the hyperspectral camera) by a conventional temperature measurement apparatus (temperature measurement apparatus by a two-color radiation temperature measurement method in which a steel sheet width position is only one position, instead of a device that measures the entire width of a steel sheet). In the case of $A_1$=0.00 in which the wavelength dependence of the emissivity is not taken into consideration illustrated in Fig. 12(a), the temperature calculated after alloying coincides with the actually measured value by the back surface thermometer, but before alloying, the calculated temperature is output higher by about 20°C than the temperature measurement result by the back surface thermometer. In a case in which the wavelength dependence coefficient $A_1$=0.10 of the GA steel sheet illustrated in Fig. 12(b) is used, the temperature calculated before alloying coincides with the temperature measurement result by the back surface thermometer, and the temperature calculated in the alloying deviates from the temperature measurement result by the back surface thermometer, but the deviation is suppressed to about 5°C. That is, it is understood that the temperature measurement accuracy can be improved by setting the wavelength dependence coefficient $A_1$=0.10 and considering the wavelength dependence.

As described above, it can be understood that the temperature of the plating surface can be measured from before alloying to after alloying with high accuracy by calculating the temperature using the wavelength dependence coefficient. In addition, since the calculation is approximate calculation, repetitive numerical calculation such as convergence calculation is unnecessary, and the temperature can be calculated at high speed.

(Effects of Wavelength Switching)

As described above, it is desirable to adjust the exposure time according to the alloying degree. However, since at least part of information in the sheet width direction of the GA steel sheet over a wide range is acquired by one imaging element, the exposure time cannot be partially adjusted for each position in the width direction in accordance with uneven alloying in the sheet width direction. Therefore, a method of calculating stable measured values in both the not-alloyed part and the alloyed part with the same exposure time was examined.

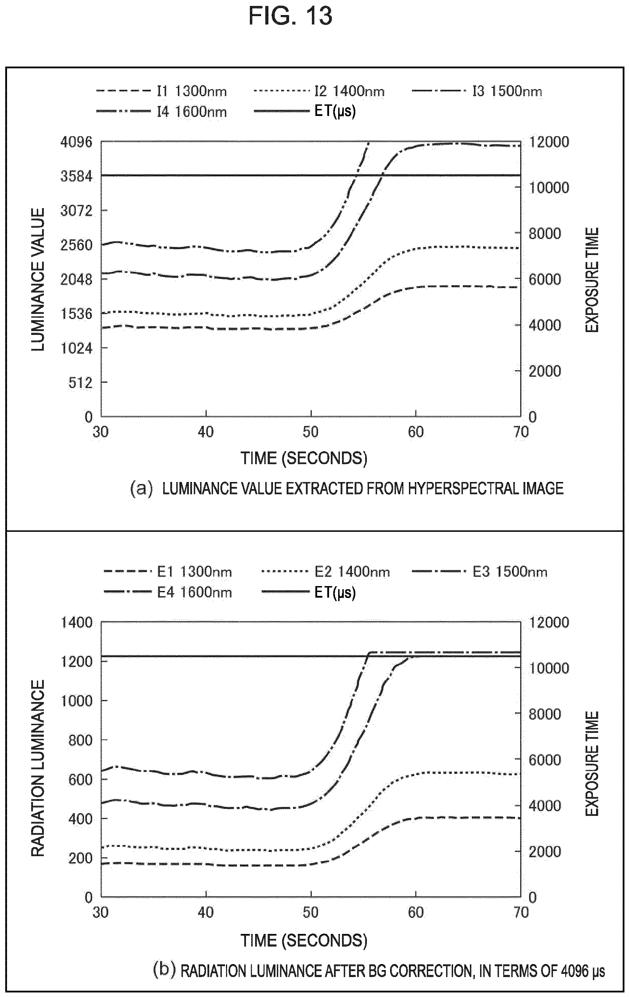

Fig. 13 shows the results obtained by performing measurement at a fixed temperature of 480°C and a sensitivity setting (exposure time of about 10,000 μs) with which sufficient radiation luminance can be secured at a temperature before alloying. Fig. 13(a) shows a luminance value extracted from the hyperspectral image, and Fig. 13(b) shows radiation luminance obtained by performing background correction and conversion corresponding to the reference exposure time (4096 μs). ET indicates the exposure time (unit: μs). I1 to I4 indicate luminance values at the respective wavelengths. E1 to E4 indicate radiation luminance at the respective wavelengths. Since the emissivity changes from about 0.2 to about 0.8 due to alloying, it can be understood that the luminance value at 1600 nm on the long wavelength side is saturated exceeding the luminance upper limit value of 4096. Since the luminance value on the short wavelength side has increased due to alloying, a luminance value sufficient for temperature calculation can be obtained.

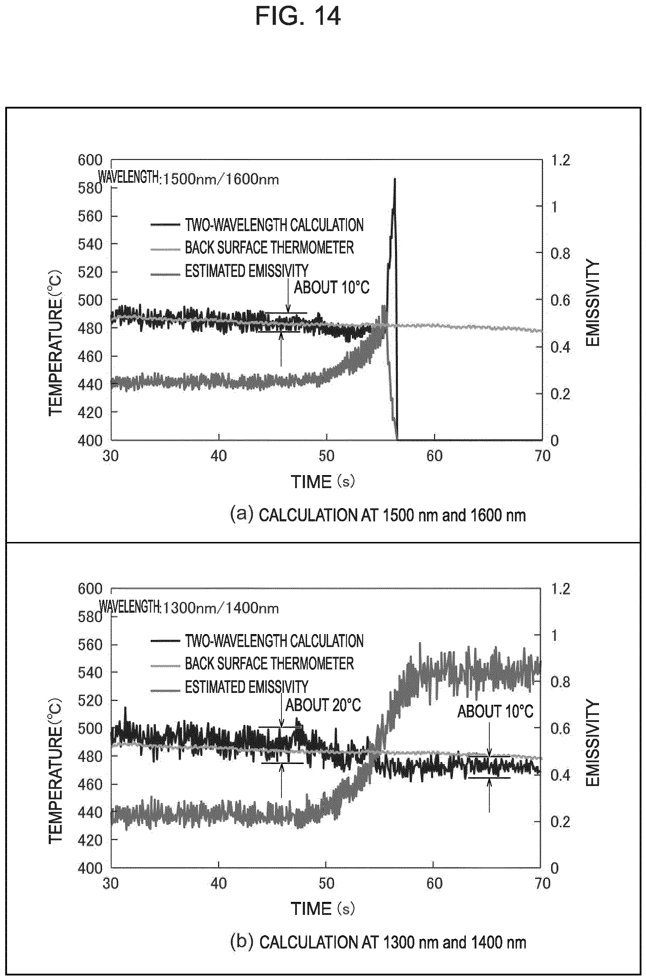

Fig. 14 shows an example of a calculation result of the temperature. Fig. 14(a) shows a result of calculating the temperature by using the radiation luminance on the long wavelength side (1500 nm and 1600 nm), and Fig. 14(b) shows a result of calculating the temperature by using the radiation luminance on the short wavelength side (1300 nm and 1400 nm). For reference, Fig. 14 shows, as a back surface thermometer, temperature measurement results at the same width position (on the back surface side opposite to the surface of the steel sheet imaged by the hyperspectral camera) by a conventional temperature measurement apparatus (temperature measurement apparatus by a two-color radiation temperature measurement method in which a steel sheet width position is only one position, instead of a device that measures the entire width of a steel sheet). Focusing on the variation in the calculated temperature (noise peak-to-peak width), as shown in Fig. 14(a), the temperature calculation result on the long wavelength side can be accurately calculated (variation is about 10°C) before alloying. However, since the imaging element is saturated after alloying, the temperature cannot be calculated. As shown in Fig. 14(b), in the temperature measurement result on the short wavelength side, the temperature can be stably calculated (variation is about 10°C) after alloying, but since the radiation luminance is low before alloying, the temperature calculation result largely varies (variation is about 20°C). As described above, when the exposure time is controlled so as not to saturate the radiation luminance of the alloying site, which becomes high on the short wavelength side (1400 nm), in the entire region in the sheet width direction even with the same exposure time, it is understood that stable and highly accurate temperature measurement can be performed in the sheet width direction of the GA steel sheet by calculating the temperature of a part having a high emissivity after alloying by the wavelength set on the short wavelength side and calculating the temperature of a part having a low emissivity before alloying by the wavelength set on the long wavelength side.

(Method of Adjusting Exposure Time)

As described above, at least one set of wavelengths needs to satisfy the condition that the radiation luminance from the lowest luminance to the luminance upper limit can be detected at any position in the sheet width direction within the measurement target range. Exposure time control of the hyperspectral camera was performed in order to secure effective measurement with any combination of wavelengths ($\lambda_1$ and $\lambda_2$, $\lambda_2$ and $\lambda_3$, $\lambda_3$ and $\lambda_4$) in the entire sheet width direction.

First, a hyperspectral image is acquired, left and right edge positions of the GA steel sheet are detected from the hyperspectral image, and a range in which the GA steel sheet exists is ascertained on the hyperspectral image. As a method of detecting the edge position, for example, a method of differentiating the distribution of the radiation luminance in the sheet width direction and searching for the maximum value and the minimum value can be used.

Then, for the wavelength $\lambda_3$, the minimum radiation luminance $I_{3min}$ within the measurement target range is searched, and the critical maximum exposure time $D_{max} = I'_{min}/I_{3min} \cdot D_p$ that does not fall below the luminance lower limit value $I'_{min}$ is calculated. $D_p$ is an exposure time at the time of imaging the acquired hyperspectral image. Then, for the wavelength $\lambda_2$, the maximum radiation luminance $I_{2max}$ within the measurement target range is searched, and the critical minimum exposure time $D_{min} = I'_{max}/I_{2max} \cdot D_p$ that does not exceed the luminance upper limit value $I'_{max}$ is calculated. An exposure time between $D_{min}$ and $D_{max}$ is then selected and the exposure time of the hyperspectral camera is changed. In a case in which there is no exposure time settable in the hyperspectral camera between $D_{min}$ and $D_{max}$, an exposure time closest to the settable exposure time is selected.

(Example of Measurement Result)

With respect to the acquired hyperspectral image, the luminance values $I_1$ to $I_4$ at the respective positions in the sheet width direction were observed, one combination of wavelengths ($\lambda_1$ and $\lambda_2$, $\lambda_2$ and $\lambda_3$, $\lambda_3$ and $\lambda_4$) with which effective luminance was obtained was selected, and the temperature was measured by a two-color radiation temperature measurement method.

In order to accurately calculate the temperature and the emissivity by the two-color radiation temperature measurement method, it is necessary that the detection luminance at two wavelengths to be used is larger than the measurement resolution and is not saturated. That is, the luminance lower limit value $I'_{min}$ and the luminance upper limit

value I'$_{max}$ are set in advance, thereby obtaining an appropriate luminance range. In a case in which a 12-bit hyperspectral camera is used, the luminance lower limit value I'$_{min}$ is about 500 after the background correction, and the luminance upper limit value I'$_{max}$ is about 3500. Since the hyperspectral camera can detect radiation luminance at a plurality of wavelengths, when temperature calculation is performed at two wavelengths, a combination of wavelengths is selected by the detected luminance at the two wavelengths.

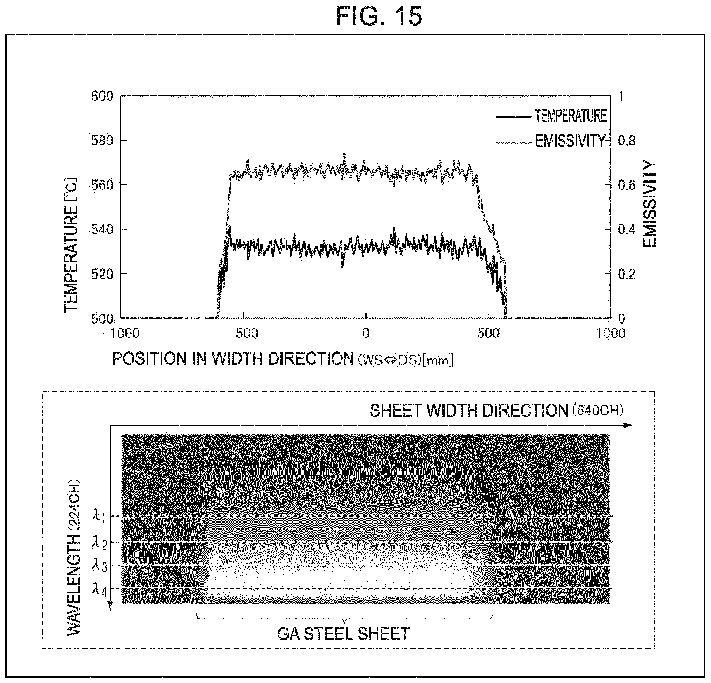

By applying the hyperspectral camera and speeding up the calculation processing using the approximate expression, the width-direction temperature measurement result can be output 20 times per 1 second. Fig. 15 shows a measurement example in a case in which there is alloying unevenness in the width direction. The temperature and the emissivity are measured in the sheet width direction of the GA steel sheet, and a state in which alloying is delayed due to temperature decrease in the vicinity of the GA steel sheet edge can clearly confirmed. As described above, since this temperature distribution meter can ascertain the alloying state in addition to the temperature distribution in the width direction, it is effective for improving the manufacturing conditions in the alloying process of the GA steel sheet.

Note that, in the above description, the case in which the GA steel sheet is used as the temperature measurement target has been mainly described as an example, but the technique of the disclosure is not limited to the GA steel sheet, and can be applied to general steel sheets. In particular, in a case in which the spectral emissivity of the steel sheet greatly changes depending on the situation, the technique of the disclosure can be suitably applied.

Although the examples of the technique of the disclosure have been described above, the technique of the disclosure is not limited to the above description, and it is a matter of course that various modifications can be made without departing from the gist of the technique other than the above description.

The disclosure of Japanese Patent Application No. 2022-125745 is incorporated herein by reference in its entirety.

Reference Signs List

| | |
|---|---|
| 10, 210 | Temperature measurement apparatus |
| 12 | Imaging unit |
| 14, 214 | Arithmetic processing unit |
| 22, 222 | Selection unit |
| 24, 222 | Calculation unit |
| 26 | Setting unit |
| 32 | CPU |
| 34 | Memory |
| 36 | Storage device |
| 38 | Input device |
| 40 | Output device |
| 42 | Storage medium reading device |
| 44 | Communication I/F |
| 46 | Bus |

**Claims**

1.  A temperature measurement apparatus that measures a temperature of a steel sheet, the temperature measurement apparatus comprising:

    an imaging unit that is a spectral camera that takes a range including at least a part in a sheet width direction of the steel sheet as a field of view and acquires radiation luminance of the steel sheet at a plurality of wavelengths at each position on a surface of the steel sheet in the field of view; and
    an arithmetic processing unit that selects two wavelengths from wavelength range at which the radiation luminance of the steel sheet is acquired by the imaging unit, and calculates a temperature at each position on the surface of the steel sheet by two-color radiation temperature measurement, by using the radiation luminance of the steel sheet acquired by the imaging unit at the two selected wavelengths.

2.  The temperature measurement apparatus according to claim 1, wherein

    the arithmetic processing unit
    holds at least two or more sets of wavelengths, consisting of two wavelengths, within wavelength range at which the radiation luminance of the steel sheet is acquired by the imaging unit,

in a case in which a position on the surface of the steel sheet at which the temperature is intended to be measured is in a region in which the radiation luminance of the steel sheet is large, selects two wavelengths included in a set in which two wavelengths on a short wavelength side are combined, from among the plurality of sets of wavelengths that are held, and, in a case in which the position on the surface of the steel sheet at which the temperature is intended to be measured is in a region in which the radiation luminance of the steel sheet is small, selects two wavelengths consisted in a set on a long wavelength side, from among the plurality of sets of wavelengths that are held, and

calculates the temperature at each position on the surface of the steel sheet by two-color radiation temperature measurement, by using the radiation luminance of the steel sheet acquired by the imaging unit at the selected two wavelengths.

3.  The temperature measurement apparatus according to claim 2, wherein

the temperature measurement apparatus is a device that measures a temperature of a hot dip galvannealed steel sheet as the steel sheet, and
the arithmetic processing unit,
in a case in which the position on the surface of the steel sheet at which the temperature is intended to be measured is in a region in which alloying of the surface of the steel sheet has progressed and the radiation luminance of the steel sheet is large, selects two wavelengths included in a set in which two wavelengths on the short wavelength side are combined, from among the plurality of sets of wavelengths that are held, and,
in a case in which the position on the surface of the steel sheet at which the temperature is intended to be measured is in a region in which alloying of the surface of the steel sheet has not progressed and the radiation luminance of the steel sheet is small, selects two wavelengths included in a set in which two wavelengths on the long wavelength side are combined, from among the plurality of sets of wavelengths that are held.

4.  The temperature measurement apparatus according to claim 2 or 3, wherein

the arithmetic processing unit
increases an exposure amount of the imaging unit in a case in which the radiation luminance of the steel sheet acquired in a set of wavelengths including the longest wavelength among the plurality of sets of wavelengths held by the arithmetic processing unit falls below a lower limit threshold value set in advance, and
reduces the exposure amount of the imaging unit in a case in which the radiation luminance of the steel sheet acquired in a set of wavelengths including the shortest wavelength among the plurality of sets of wavelengths held by the arithmetic processing unit exceeds an upper limit threshold value set in advance.

5.  The temperature measurement apparatus according to any one of claims 1 to 4, wherein

the arithmetic processing unit
divides the field of view of the imaging unit into a plurality of sections along a width direction of the steel sheet, and obtains a wavelength range in which the imaging unit is able to acquire the radiation luminance of the steel sheet, for each of the sections,
selects two wavelengths from the wavelength range in which the radiation luminance of the steel sheet is able to be acquired for each section, and
calculates the temperature at each position on the surface of the steel sheet by two-color radiation temperature measurement, by using the radiation luminance of the steel sheet acquired by the imaging unit at the selected two wavelengths.

6.  The temperature measurement apparatus according to any one of claims 1 to 5, wherein the arithmetic processing unit selects, as the two wavelengths, wavelengths shorter than a wavelength at which the radiation luminance of the steel sheet becomes maximum.

7.  The temperature measurement apparatus according to any one of claims 1 to 6, wherein the arithmetic processing unit detects edge positions on both sides in the sheet width direction of the steel sheet from an image acquired by the imaging unit, and determines a range in which the temperature is to be measured based on the detected edge positions.

8.  A temperature measurement method of measuring a temperature of a steel sheet, the temperature measurement method comprising:

a luminance acquisition step of acquiring radiation luminance of the steel sheet at a plurality of wavelengths at each position on a surface of the steel sheet in a field of view, by using an imaging unit that is a spectral camera taking, as the field of view, a range including at least a part of the steel sheet in a sheet width direction; and a temperature calculation step of, by using an arithmetic processing unit, selecting two wavelengths from wavelength range at which the radiation luminance of the steel sheet is acquired by the imaging unit and calculating a temperature at each position on the surface of the steel sheet by two-color radiation temperature measurement, by using the radiation luminance of the steel sheet acquired by the imaging unit at the two selected wavelengths.

9.  The temperature measurement method according to claim 8, wherein

the arithmetic processing unit
holds at least two or more sets of wavelengths, consisting of two wavelengths, within wavelength range at which the radiation luminance of the steel sheet is acquired by the imaging unit, and
in the temperature calculation step,
in a case in which a position on the surface of the steel sheet at which the temperature is intended to be measured is in a region in which the radiation luminance of the steel sheet is large, two wavelengths included in a set in which two wavelengths on a short wavelength side are combined are selected from among the plurality of sets of wavelengths that are held, and, in a case in which the position on the surface of the steel sheet at which the temperature is intended to be measured is in a region in which the radiation luminance of the steel sheet is small, two wavelengths consisted in a set on a long wavelength side are selected from among the plurality of sets of wavelengths that are held, and
the temperature at each position on the surface of the steel sheet is calculated by two-color radiation temperature measurement, by using the radiation luminance of the steel sheet acquired by the imaging unit at the selected two wavelengths.

10. The temperature measurement method according to claim 9, wherein

the temperature measurement method is a method of measuring a temperature of a hot dip galvannealed steel sheet as the steel sheet, and
in the temperature calculation step,
in a case in which the position on the surface of the steel sheet at which the temperature is intended to be measured is in a region in which alloying of the surface of the steel sheet has progressed and the radiation luminance of the steel sheet is large, two wavelengths included in a set in which two wavelengths on the short wavelength side are combined are selected from among the plurality of sets of wavelengths that are held, and in a case in which the position on the surface of the steel sheet at which the temperature is intended to be measured is in a region in which alloying of the surface of the steel sheet has not progressed and the radiation luminance of the steel sheet is small, two wavelengths included in a set in which two wavelengths on the long wavelength side are combined are selected from among the plurality of sets of wavelengths that are held.

11. The temperature measurement method according to claim 9 or 10, wherein

in the temperature calculation step,
an exposure amount of the imaging unit is increased in a case in which the radiation luminance of the steel sheet acquired in a set of wavelengths including the longest wavelength among the plurality of sets of wavelengths held by the arithmetic processing unit falls below a lower limit threshold value set in advance, and
the exposure amount of the imaging unit is reduced in a case in which the radiation luminance of the steel sheet acquired in a set of wavelengths including the shortest wavelength among the plurality of sets of wavelengths held by the arithmetic processing unit exceeds an upper limit threshold value set in advance.

12. The temperature measurement method according to any one of claims 8 to 11, wherein

in the temperature calculation step,
the field of view of the imaging unit is divided into a plurality of sections along a width direction of the steel sheet, and a wavelength range in which the imaging unit is able to acquire the radiation luminance of the steel sheet is obtained for each of the sections,

two wavelengths are selected from the wavelength range in which the radiation luminance of the steel sheet is able to be acquired for each section, and

the temperature at each position on the surface of the steel sheet is calculated by two-color radiation temperature measurement, by using the radiation luminance of the steel sheet acquired by the imaging unit at the selected two wavelengths.

13. The temperature measurement method according to any one of claims 8 to 12, wherein, in the temperature calculation step, wavelengths shorter than a wavelength at which the radiation luminance of the steel sheet becomes maximum are selected as the two wavelengths.

14. The temperature measurement method according to any one of claims 8 to 13, wherein, in the temperature calculation step, edge positions on both sides in the sheet width direction of the steel sheet are detected from an image acquired by the imaging unit, and a range in which the temperature is to be measured is determined based on the detected edge positions.

FIG. 1

# FIG. 2

# FIG. 3

14,214

38

INPUT DEVICE

32

CPU

40

OUTPUT DEVICE

34

RAM

42

STORAGE MEDIUM READING DEVICE

36

STORAGE DEVICE

44

COMMUNICATION I/F

46

# FIG. 4

```
        ┌─────────────────┐
        │      START       │
        └─────────────────┘
                 │
                 ▼
  ┌──────────────────────────────┐
  │   ACQUIRE HYPERSPECTRAL       │ ～ S10
  │   IMAGE BY IMAGING UNIT       │
  └──────────────────────────────┘
                 │
                 ▼
  ┌──────────────────────────────────────┐
  │ DETERMINE WHETHER RADIATION LUMINANCE │ ～ S12
  │   AT POSITION AT WHICH TEMPERATURE IS │
  │ INTENDED TO BE MEASURED IS LARGE OR SMALL │
  └──────────────────────────────────────┘
                 │
                 ▼
  ┌──────────────────────────────┐
  │  SELECT SET OF WAVELENGTHS    │ ～ S14
  │    ACCORDING TO RADIATION     │
  │         LUMINANCE             │
  └──────────────────────────────┘
                 │
                 ▼
  ┌──────────────────────────────────────┐
  │   CALCULATE TEMPERATURE BY USING      │ ～ S16
  │ RADIATION LUMINANCE AT TWO WAVELENGTHS │
  │  INCLUDED IN SET OF WAVELENGTHS       │
  └──────────────────────────────────────┘
                 │
                 ▼            S18
            ◇ IS MEASUREMENT ◇ ──── NO
            AT ALL MEASUREMENT POINTS
                 ENDED?
                 │ YES
                 ▼            S20
            ◇ IS PROCESSING ON ◇ ──── NO
            ALL IMAGES ENDED?
                 │ YES
                 ▼
        ┌─────────────────┐
        │       END        │
        └─────────────────┘
```

# FIG. 5

# FIG. 6

START

ACQUIRE HYPERSPECTRAL
IMAGE BY IMAGING UNIT — S10

SPECIFY RANGE IN WHICH RADIATION
LUMINANCE CAN BE ACQUIRED FOR SECTION
OF POSITION AT WHICH TEMPERATURE
IS INTENDED TO BE MEASURED — S210

SELECT WAVELENGTH FROM RANGE
IN WHICH RADIATION LUMINANCE
CAN BE ACQUIRED — S212

CALCULATE TEMPERATURE BY USING
RADIATION LUMINANCE AT TWO WAVELENGTHS
INCLUDED IN SET OF WAVELENGTHS — S214

S216
IS MEASUREMENT
AT ALL MEASUREMENT POINTS
ENDED?                          NO

YES

S218
IS PROCESSING ON
ALL IMAGES ENDED?               NO

YES

END

# FIG. 7

EP 4 542 187 A1

FIG. 8

(a) $\lambda_1=1300$nm

(b) $\lambda_2=1400$nm

(c) $\lambda_3=1500$nm

(d) $\lambda_4=1600$nm

EP 4 542 187 A1

# FIG. 9

RADIATION LUMINANCE CORRESPONDING TO 4096 μs

14000

12000

10000

8000

6000

4000

2000

0

$\triangle$ 1500nm  $y=5.247E+08e^{9.507E+03x}$

$\times$ 1600nm  $y=3.289E+08e^{8.886E+03x}$

$\diamond$ 1400nm  $y=5.725E+08e^{1.012E+04x}$

$\square$ 1300nm  $y=1.063E+09e^{1.094E+04x}$

0.001  0.0012  0.0014  0.0016  0.0018

1/T (K-1)

# FIG. 10

EP 4 542 187 A1

# FIG. 11

(a) LUMINANCE VALUE EXTRACTED FROM HYPERSPECTRAL IMAGE

(b) RADIATION LUMINANCE AFTER BG CORRECTION, IN TERMS OF 4096 μs

# FIG. 12

(a) CALCULATION RESULT AT A1 = 0.00

(b) CALCULATION RESULT AT A1 = 0.10

# FIG. 13

(a) LUMINANCE VALUE EXTRACTED FROM HYPERSPECTRAL IMAGE

(b) RADIATION LUMINANCE AFTER BG CORRECTION, IN TERMS OF 4096 μs

# FIG. 14

(a) CALCULATION AT 1500 nm and 1600 nm

(b) CALCULATION AT 1300 nm and 1400 nm

# FIG. 15

# FIG. 16

<table>
<tr><td colspan="2" align="center">**INTERNATIONAL SEARCH REPORT**</td><td>International application No.<br><br>**PCT/JP2023/023673**</td></tr>
</table>

**A. CLASSIFICATION OF SUBJECT MATTER**

*G01J 5/00*(2022.01)i; *C23C 2/06*(2006.01)i; *G01J 5/60*(2006.01)i
FI: G01J5/00 101B; G01J5/60 E; C23C2/06

According to International Patent Classification (IPC) or to both national classification and IPC

**B. FIELDS SEARCHED**

Minimum documentation searched (classification system followed by classification symbols)

G01J 5/00-5/90; G01K 13/00; G01K 13/06; G01N 25/00-25/72;B21C 51/00; C23C 2/00-2/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-072050 A (IHI CORP.) 10 May 2018 (2018-05-10) | 1-2, 6, 8-9, 13 |
| | paragraphs [0019], [0021]-[0025], [0027]-[0030], [0036]-[0041], [0043]-[0055], fig. 1-3 | |
| Y | | 3-5, 7, 10-12, 14 |
| Y | WO 2022/091541 A1 (JFE STEEL CORP.) 05 May 2022 (2022-05-05) | 3-5, 7, 10-12, 14 |
| | paragraphs [0027], [0046], [0059] | |
| Y | JP 59-075786 A (NIPPON DENSHI KK) 28 April 1984 (1984-04-28) | 5, 7, 12, 14 |
| | page 3, lower left column, line 2 to page 4, upper right column, line 5, fig. 2, 5 | |
| Y | JP 09-053919 A (TOSHIBA CORP.) 25 February 1997 (1997-02-25) | 7, 14 |
| | paragraph [0002], fig. 2 | |
| A | JP 07-260581 A (NISSHIN STEEL CO., LTD.) 13 October 1995 (1995-10-13) | 1-14 |
| | entire text, fig. 1-15 | |
| A | JP 05-142052 A (KAWASAKI STEEL CORP.) 08 June 1993 (1993-06-08) | 1-14 |
| | entire text, fig. 1-19 | |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT | International application No. |
|---|---|
| | **PCT/JP2023/023673** |

**C.     DOCUMENTS CONSIDERED TO BE RELEVANT**

| Category* | Citation of document, with indication, where appropriate, of the relevant passages | Relevant to claim No. |
|---|---|---|
| P, A | JP 2022-175598 A (JFE STEEL CORP.) 25 November 2022 (2022-11-25)<br>entire text, fig. 1-7 | 1-14 |

INTERNATIONAL SEARCH REPORT
Information on patent family members

International application No.

**PCT/JP2023/023673**

| Patent document cited in search report | | | Publication date (day/month/year) | Patent family member(s) | | | Publication date (day/month/year) |
|---|---|---|---|---|---|---|---|
| JP | 2018-072050 | A | 10 May 2018 | (Family: none) | | | |
| WO | 2022/091541 | A1 | 05 May 2022 | (Family: none) | | | |
| JP | 59-075786 | A | 28 April 1984 | (Family: none) | | | |
| JP | 09-053919 | A | 25 February 1997 | (Family: none) | | | |
| JP | 07-260581 | A | 13 October 1995 | (Family: none) | | | |
| JP | 05-142052 | A | 08 June 1993 | US | 5314249 | A | |
| | | | | EP | 543326 | A2 | |
| JP | 2022-175598 | A | 25 November 2022 | (Family: none) | | | |

Form PCT/ISA/210 (patent family annex) (January 2015)

42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H285730 A
- JP H5231944 A
- JP H953992 A
- JP 2012132442 A
- JP 2022125745 A